(19) Europäisches Patentamt
European Patent Office
Office européen des brevets

(11) **EP 3 789 921 B1**

(12) **EUROPEAN PATENT SPECIFICATION**

(45) Date of publication and mention
of the grant of the patent:
**23.07.2025 Bulletin 2025/30**

(21) Application number: **19195367.8**

(22) Date of filing: **04.09.2019**

(51) International Patent Classification (IPC):
**G06N 3/0464** *(2023.01)*   **G06N 3/092** *(2023.01)*
**G06N 3/088** *(2023.01)*   **G06N 3/045** *(2023.01)*

(52) Cooperative Patent Classification (CPC):
**G06N 3/088; G06N 3/045; G06N 3/0464;
G06N 3/092**

(54) **MACHINE LEARNING METHOD FOR A PHYSICAL SYSTEM**

MASCHINENLERNVERFAHREN FÜR EIN PHYSIKALISCHES SYSTEM

PROCÉDÉ D'APPRENTISSAGE PAR MACHINE POUR UN SYSTÈME PHYSIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.03.2021 Bulletin 2021/10**

(73) Proprietors:
• **Robert Bosch GmbH**
**70442 Stuttgart (DE)**
• **SAP SE**
**69190 Walldorf (DE)**

(72) Inventors:
• **Herman, Michael**
**71065 Sindelfingen (DE)**
• **Kipf, Thomas**
**1019 WJ Amsterdam (NL)**
• **Welling, Max**
**1402 GN Bussum (NL)**
• **van der Pol, Elise**
**1098 XH Amsterdam (NL)**

(74) Representative: **DeltaPatents B.V.**
**Fellenoord 370**
**5611 ZL Eindhoven (NL)**

(56) References cited:
• **NICHOLAS WATTERS ET AL: "COBRA: Data-Efficient Model-Based RL through Unsupervised Object Discovery and Curiosity-Driven Exploration", ARXIV.ORG, CORNELL UNIVERSITY LIBRARY, 201 OLIN LIBRARY CORNELL UNIVERSITY ITHACA, NY 14853, 22 May 2019 (2019-05-22), XP081461950**
• **CHRISTOPHER P BURGESS ET AL: "MONet: Unsupervised Scene Decomposition and Representation", ARXIV.ORG, CORNELL UNIVERSITY LIBRARY, 201 OLIN LIBRARY CORNELL UNIVERSITY ITHACA, NY 14853, 22 January 2019 (2019-01-22), XP081013297**
• **OLIVER KROEMER ET AL: "A Review of Robot Learning for Manipulation: Challenges, Representations, and Algorithms", ARXIV.ORG, CORNELL UNIVERSITY LIBRARY, 201 OLIN LIBRARY CORNELL UNIVERSITY ITHACA, NY 14853, 6 July 2019 (2019-07-06), XP081438830**
• **OPENAI: MARCIN ANDRYCHOWICZ ET AL: "Learning Dexterous In-Hand Manipulation", ARXIV.ORG, CORNELL UNIVERSITY LIBRARY, 201 OLIN LIBRARY CORNELL UNIVERSITY ITHACA, NY 14853, 1 August 2018 (2018-08-01), XP081411205**

## Description

### FIELD

The presently disclosed subject matter relates to a computer-implemented neural-network method to represent a state of a physical system for enabling controlling and/or classifying the physical system, a computer-implemented neural-network method controlling and/or classifying a physical system, a neural network device to represent a state of a physical system for enabling controlling and/or classifying the physical system, a neural network device for controlling and/or classifying a physical system and a computer readable medium.

### BACKGROUND

Compositional reasoning in terms of objects, relations, and actions is an important component of human cognition. Disentangling complicated scenes into objects and their properties and relations facilitates predicting physical dynamics and the consequences of actions.

However, for machine learning systems deriving a structured understanding of a physical system based on sensor inputs remains difficult. Unsupervised approaches generally rely on an auto-encoding objective involving some reconstruction or prediction loss in pixel space. However, models based on auto-encoding in pixel space usually require carefully trading off structural constraints on latent variables vs. accuracy of reconstruction. Typical failure modes include ignoring visually small, but highly relevant features for predicting the future, such as a bullet in an Atari game, or waste of model capacity on visually rich, but otherwise potentially irrelevant features, such as static backgrounds.

There is a desire for a machine learning system that learns to represent the state of a physical system that has such a structured understanding. Such a representation is useful for many applications. For example, it can be used to learn representations from pure observations that could be used to manipulate the scene, e.g., by a robot. In an automated driving setting, it can be used to represent information about the environment in an agent-factorized setting, as traffic participants, e.g., pedestrians, cars, etc., typically act according to own goals, while interacting with each other. Furthermore, the representation may be used for estimating or classifying the state of the object, especially if the classification depends on the interactions between the various parts of the system.

Another useful application is to planning methods. Currently, planning methods to solve a planning task typically do so on a reduced state space, such as a

discrete graph. For example, a Markov decision problem also known as a Markov decision process (MDP) may be formulated for the planning problem. A Markov decision process is a discrete time stochastic control process. It provides a mathematical framework for modeling decision making in situations where outcomes may be partly random and/or partly under the control of a decision maker.

An MDP typically has a set of states, in which the process can be, and actions that can be performed on the system. At each time step, the process is in some state s, and the decision maker may choose any action *a* that is available in state s. The process responds at the next time step by randomly moving into a new state s'. Some states may give the decision maker a reward. The probability that the process moves into its new state s' may depend on the chosen action and is given by a state transition function $P_a(s,s')$.

A policy may be obtained for an MDP by solving it. The policy describes an action for each state in the MDP to optimize or at least improve the rewards received. The MDP can be solved through a variety of methods, such as dynamic programming. MDPs are used in many disciplines, including robotics, and manufacturing.

Many real world decision making tasks may be modelled with an MDP, yet establishing such an MDP may be hard.

The paper "Value Iteration Networks" by Aviv Tamar, et al discloses a value iteration network (VIN). It uses a neural network with a planning module embedded within. The VIN can learn to plan, and is suitable for predicting outcomes that involve planning-based reasoning. In this approach, the value-iteration algorithm is represented as a convolutional neural network, and trained end-to-end using backpropagation. For example, the VIN may learn policies on discrete and continuous path-planning domains.

The known approach uses a CNN-based architecture that is applied on 2D lattices as state spaces. This imposes a restriction on the models that can be learnt. Moreover, the state space is typically not known a-priori.

NICHOLAS WATTERS et al.: "COBRA: Data-Efficient Model-Based RL through Unsupervised Object Discovery and Curiosity-Driven Exploration", ARXIV.ORG, 22.5.2019, discloses a model for data-efficient reinforcement learning using unsupervised learning to build object-based models of environments and actions.

CHRISTOPHER P BURGESS et al.: "MONet: Unsupervised Scene Decomposition and Representation", ARXIV.ORG, 22.1.2019, discloses a model for unsupervised scene decomposition using a VAE and recurrent attention network to identify and represent scene elements.

OLIVER KROEMER et al.: "A Review of Robot Learning for Manipulation: Challenges, Representations, and Algorithms", ARXIV.ORG, 6.7.2019, discloses a survey of machine

learning techniques for robot manipulation, formalizing the problem and identifying research opportunities.

OPENAI: MARCIN ANDRYCHOWICZ et al.: "Learning Dexterous In-Hand Manipulation", ARXIV.ORG, 1.8.2018, discloses using reinforcement learning to develop dexterous in-hand manipulation policies that transfer from simulation to physical robots.

## SUMMARY

The invention is defined by the features of the independent claims. Some specific embodiments are defined in the dependent claims.

Learning good representations of physical system is a complex task, as the requirements of these representations can be hard to realize. For example, representation may involve reasoning over different objects, generalization, allowing model interactions, and the like. It would be advantageous to have improved methods to represent physical systems.

To address these and other issues, a machine learning device may learn an encoder function and a transition function from a set of training data which comprises pairs of an action and a corresponding observable state transition. The encoder function may be configured for mapping the sensor data to a latent representation of the state of the physical system. The encoder function may comprise one or more neural networks configured for extracting multiple objects from the sensor data and for mapping the multiple objects to the latent space. By extracting multiple objects and mapping the multiple objects to the latent space it is enforced that an object factorized understanding is learnt. Furthermore, the transition function may be applied to a latent representation of the state of the physical system and to action data representing an action performed on the physical system, the transition function comprising a neural network producing a predicted latent representation of the state of the physical system having the action performed on it. By learning to predict how actions affect the physical system as represented in the latent space, a structural understanding is encouraged. The system learns those aspects of the physical system that are needed to predict the effect of actions. The latent space may be a continuous vector space.

In an embodiment, the latent representation of the state of the physical system comprises multiple latent object representations. For example, a first part of the encoder function may comprise a neural network configured for extracting multiple objects from the sensor data, and a second part of the encoder function may comprise a neural network configured for mapping the multiple objects to the latent space. The first part of the encoder function may have multiple object outputs, an object output of the multiple object outputs indicating an object in the sensor data. The second part of the encoder function may map the multiple object outputs to the latent space. In an embodiment, the second part takes fewer than all object slots as input, e.g., a single object representation of the first part, and maps it to a single latent object representation. This embodiment provides high sharing of values among objects. In an embodiment, multiple types of second part are applied depending on the type of object detected by the first part.

Having improved representations of physical systems can be applied in many fields. For example in robotics for manufacturing. The physical system represented comprises a robotic device, such as robot arm. For example, the robotic device may be used in manufacturing, e.g., to manipulate and/or assemble components. For example, the robotic device may be used in a factory to manufacture, assemble, prepare, etc., other devices such as, e.g., machinery, cars, electronics, etc. The physical system may also or instead comprise the components that a robotic device operates on, e.g., components, raw materials, etc.

For example, a robot may observe his environment with one or more sensors, e.g., camera, LIDAR, etc. For example, the robot may be used to build together certain parts. Using manual modelling or other conventional solutions, it is often hard to model the environment completely, especially based on observations from noisy sensors. In an approach according to an embodiment, objects in sensor data are factorized and transitions are modelled, which allows to predict influences of manipulating actions. Therefore, such a method is beneficial for controlling robots in manufacturing plants.

Interestingly, the object outputs may be configured to factorize over objects so that they learn to contain information that allows to predict the latent space abstraction of that particular object, e.g., to predict transitions.

In an embodiment, neural networks are trained as an object extractor, e.g., an image to real-valued feature map and as an object encoder, e.g., as flattened feature map to $R^k$ where k is set to parameter. In an embodiment, k is 2 or more, so that it can reflect a real-valued 2D position of an object. In an embodiment, the joint object extractor and encoder are arranged to encode the one or more objects into one or more latent states that together represent the physical system.

Also the transition function may be, e.g., a mapping from the encoded latent object states and the action space to the latent encoded space.

In an embodiment, the transition function comprises a graph neural network. The graph neural network may act on multiple nodes having the multiple latent object representations as node inputs. In an embodiment, the nodes may also have an action as input corresponding to the same object. It was found that that a GNN allows predictions that take interactions between objects into account. For example, the model may learn that some action may not have an effect or a different effect if other objects obstruct it.

For example, the physical system is a computer-controlled physical system. For example, in an embodiment the physical system comprises objects, e.g., components, that can be manipulated by a manufacturing machine, e.g., a robot arm. The components can be moved for further manipulation, e.g., assembly, the system learns that components cannot be moved through each other. Interestingly, a planner that can be derived from the learned system may plan to move the components into positon, e.g., to assemble them.

A classifier can be derived from the learned system that learns to recognize if the components are not arranged properly, or have an object missing, or cannot be manipulated as desired, etc. Note that in an embodiment, the encoder function will always derive a latent state for the physical system. For example, the encoder function may be arranged to derive a latent representation of an object slot, of an object extractor even when the object does not exist. The classifier part may be learned to detect such missing objects.

Once the encoder and transition functions have been learned, they may be used for various purposes. For example, the encoder function, separate from the transition function may be used for classification of the state of the physical system, e.g., as safe or unsafe or as low-emission versus high-emission, etc. For example, the encoder and transition function may be used in a planner that operates on the physical system. For example, a Markov decision problem may be defined on a set of vertices, e.g., corresponding to points in the latent space. Transition probabilities, e.g., a probability transition function may be obtained from the latent transition function.

Another useful application is the control of complex systems. Conventional reinforcement learning based approaches require a large amount of interaction samples to derive suitable policies. In an embodiment, the control or planning problem may be solved in a reduced state space, such a discrete graph.

In this way, a state space can be learned based on environmental dynamics that is observed in the training data. The Markov decision problem that can be defined on the state space allows for dynamic programming for planning purposes. Interestingly, it is not needed to know the state space a-priori. Furthermore, no particular restrictions need to be imposed on the problem or the structure of its associated graph on the vertices.

In an embodiment, planning an action for a physical system may take several phases. For example, first the structure of the state space may be learnt, e.g., the encoder and transition functions. This part may be referred to as pre-training. In a second phase, after pre-training, a Markov decision problem is formulated and solved. Obtaining an MDP from the latent space may be called discretization. Note that using an MDP with a discrete state and/or action space eases planning. According to non-claimed embodiments, the problem could also be solved in continuous latent space with more complex solutions to derive control policies.

The MDP may be obtained directly for the desired planning, or first a general Markov decision problem may be formulated which may be modified later for a particular goal. In a third phase, the Markov decision problem is solved to obtain a policy, or at least a next action to take in the physical system. A control signal may be generated to cause the action in the physical system. The machine learning device may be configured to perform at least the pre-training phase. The machine learning planner may be configured to perform at least the third phase. The second phase may be done either by the machine learning device for learning a planner or the machine learning planner for a physical system, or distributed between them. One could configure a single device to perform all parts.

It was found that the learned representations are plannable. Running dynamic programming in the latent space results in good policies for the input space. Moreover, the pre-training part does not need to depend on the particular planning goal. Thus, one can, without retraining, plan for a new goal and/or a new reward.

The physical system may comprise one or more movable parts and may be arranged in one of multiple observable states. The observable states comprise information regarding the position and/or orientation of the one more movable parts. However, there is no requirement that the observable states provide an ordered list of said position and/or orientation. In fact the observable states may comprise the output of several types of sensors. Such a sensor may directly provide one or more location parameters, wherein a location parameter represents a location, a translation, or an angle of a movable part of the physical system. However, the output of a sensor may also correlate less directly with location parameters. In particular, a sensor may be an image sensor and an observable state may comprise an image of the system. The output of the sensors may be noisy, and may be low or high dimensional.

In the physical system, it may be that a particular part can only be moved if some other object is in a particular state, e.g., only able to open a catch when a button is pressed at the same time.

The method of claim 1, wherein the physical system comprises one or more objects such as movable parts, the sensor data comprises information about the state of these objects, such as describing the position and/or orientation of movable parts.

The machine learning device for learning a representation, a machine learning planner, and a machine learning classifier are electronic devices. For example, they may be implemented in a computer, possibly arranged with one or more sensors for obtaining observable states, and/or with a controller for generating a control signal in dependency on a planned action.

The neural network methods described herein may be applied in a wide range of practical applications. Such practical applications include, e.g., the planning of autonomously moving devices, such as vehicles and robot arms. Such practical applications include, e.g., the classification of physical systems.

An embodiment of the methods may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading. This aspect is used when the computer program is uploaded into, e.g., Apple's App Store, Google's Play Store, or Microsoft's Windows Store, and when the computer program is available for downloading from such a store.

## BRIEF DESCRIPTION OF THE DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1a schematically shows an example of an embodiment of a machine learning device,
Figure 1b schematically shows an example of an embodiment of a machine learning device,
Figure 1c schematically shows an example of an embodiment of a machine learning planner,
Figure 1d schematically shows an example of an embodiment of a machine learning planner,
Figure 2a schematically shows an example of an embodiment of a physical system,
Figure 2b schematically shows an example of an embodiment of a robot arm,
Figure 3a schematically illustrates an example of data structures in an embodiment of a machine learning device,
Figure 3b schematically illustrates an example of data structures in an embodiment of a machine learning device,
Figure 3c schematically illustrates an example of data structures in an embodiment of a machine learning planner,
Figure 3d schematically illustrates an example of data structures in an embodiment of a machine learning classifier,
Figure 4 schematically illustrates an example of an embodiment of a computer-implemented neural-network method to represent a state of a physical system,
Figure 5 schematically illustrates an example of an embodiment of a computer-implemented neural-network method controlling and/or classifying a physical system,
Figure 6a schematically shows a computer readable medium having a writable part comprising a computer program according to an embodiment,
Figure 6b schematically shows a representation of a processor system according to an embodiment.

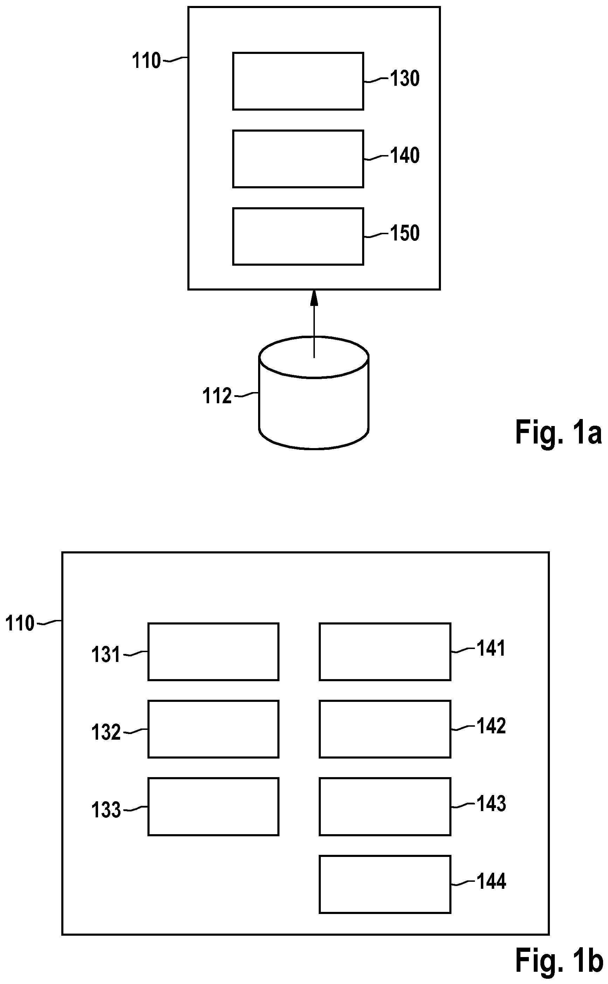

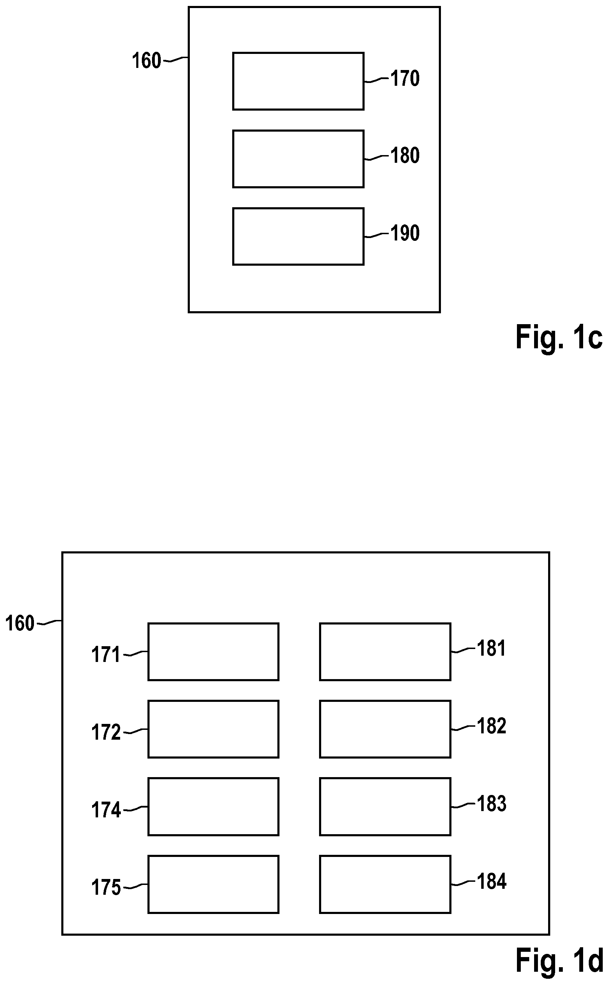

List of Reference Numerals in figures 1-3c:

110    a machine learning device
112    training data storage
130    a processor system
131    an encoder function
132    a latent transition function
133    a discretizer
140    a memory
141    an action storage
142    an observable state storage
143    a latent state storage
144    a Markov decision problem storage
150    a communication interface
160    machine learning planner
170    a processor system

171    an encoder function
172    a latent transition function
174    a Markov planner
175    a controller
180    a memory
181    an action storage
182    an observable state storage
183    a latent state storage
184    a Markov decision problem storage
190    a communication interface
200    a physical system
210    movable parts
212    an actuator
214    a sensor
220    a controller
230    a camera
240    a robot arm
241    a link
242    a tool
243    a joint

301    sensor data
310    observable state space
311    an encoder function
311.1  an object extractor
311.2  an object encoder
312    a first object representation
313    a latent object representation
314    a latent state representation
315    a latent state representation
318    a classifier
319    a state classification
320    latent state space
321    a transition function
321    a latent transition function
331    a discretization
332    a probability assignment
340    a Markov decision problem
341    a set of vertices
342    transition probabilities
344    problem modification
350    an adapted Markov decision problem
351    an adapted set of vertices
352    adapted transition probabilities
353    additional vertices
360    an action
361    a Markov decision problem solver
362    an iteration
370    an action representation
371    an action encoder
372    a latent action representation

1000   a computer readable medium
1010   a writable part
1020   a computer program
1110   integrated circuit(s)
1120   a processing unit
1122   a memory

1124    a dedicated integrated circuit
1126    a communication element
1130    an interconnect
1140    a processor system

## DETAILED DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the presently disclosed subject matter is not limited to the embodiments, as feature described herein or recited in mutually different dependent claims.

**Figure 1a** schematically shows an example of an embodiment of a machine learning device 110. **Figure 1c** schematically shows an example of an embodiment of a machine learning planner 160. For example, the machine learning device 110 of figure 1a may be used to train the parameters of the machine learning device, e.g., of neural networks, that may be used in the machine learning planner 160.

Machine learning device 110 may comprise a processor system 130, a memory 140, and a communication interface 150. Machine learning device 110 may be configured to communicate with a training data storage 112. Storage 112 may be a local storage of system 110, e.g., a local hard drive or memory. Storage 112 may be non-local storage, e.g., cloud storage. In the latter case, storage 112 may be implemented as a storage interface to the non-local storage.

Machine learning planner 160 may comprise a processor system 170, a memory 180, and a communication interface 190.

Systems 110 and/or 160 may communicate with each other, external storage, input devices, output devices, and/or one or more sensors over a computer network. The computer network may be an internet, an intranet, a LAN, a WLAN, etc. The computer network may be the Internet. The systems comprise a connection interface which is arranged to communicate within the system or outside of the system as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

The execution of system 110 and 160 may be implemented in a processor system, e.g., one or more processor circuits, e.g., microprocessors, examples of which are shown herein. Figures 1b and 1d show functional units that may be functional units of the processor system. For example, figures 1b and 1d may be used as a blueprint of a possible functional organization of the processor system. The processor circuit(s) are not shown separate from the units in these figures For example, the functional units shown in figures 1b and 1d may be wholly or partially implemented in computer instructions that are stored at system 110 and 160, e.g., in an electronic memory of system 110 and 160, and are executable by a microprocessor of system 110 and 160. In hybrid embodiments, functional units are implemented partially in hardware, e.g., as coprocessors, e.g., neural network coprocessors, and partially in software stored and executed on system 110 and 160. Parameters of the network and/or training data may be stored locally at system 110 and 160 or may be stored in cloud storage.

The planner may be learned for and applied to a physical system. For example, the physical system may be arranged with multiple observable states into which the physical system may be configured. A set of multiple actions may be performed on the physical system to cause a state transition from a first observable state of the physical system to a second observable state of the physical system. The states that can be observed in the physical system may be continuous or discrete. The feedback on the states may be noisy. An observable state may comprise the sensor data obtained from one or multiple sensors.

The physical system comprises one or more movable parts. The observable states comprise information describing the position and/or orientation of the one more movable parts, etc. The planner may be a motion planner for planning a sequence of actions to control the physical system towards a goal state, e.g., a particular desired configuration of its movable parts.

The observable states of the physical system may be obtained by observing the physical system with one or more sensors. For example, the one or more movable parts may be observed with the one or more sensors. A sensor may directly measure some aspect of a movable part, e.g., its movement, locations, orientation, etc. Such a sensor may be integrated in the physical system, e.g., integrated in or with a ball bearing of the system, etc. For example, a sensor may be configured to measure a location parameter, e.g., of the physical system, e.g., of a movable part. For example, a location parameter may represent a location, a translation, or an angle of a movable part of the physical system. The sensor may also indirectly measure the movable parts, for example, the sensor may obtain an image modality such as a video, radar, LiDAR, ultrasonic, motion sensor, etc. For example, the observable state may comprise an image of the physical system.

A further aspect of the invention concerns a physical system classifier device. The classifier device may use an encoder as trained by machine learning device 110. The classifier device may omit the transition function. Although learning the transition function will improve the learning of the encoder, as it forces a structural understanding of the physical system, the transition function is not needed for all applications. Furthermore, the classifier device may use an additional neural network for classifying. For example, the additional neural network may use as input a latent representation of the physical system and produce as output a label. For example, the classifier may classify the fuel consumption, or emissions and the like, of a motor on the basis of sensor inputs. For example, the label may be ecological versus non-ecological, or safe and unsafe.

Collectively, cars and trucks account for a large part of all emissions. The classifier may classify, e.g., predict the emission, e.g., the carbon dioxide emission and/or other global-warming gases based on the physical state representation. The classifier may be trained on a dataset with labeled physical states.

For example, the state of a motor may be represented in the form of one or more sensor readings, e.g., temperature, pressure and the like, speed readings, etc. The actions that may be performed on the motor may include the control signal sent to gas, brake, acceleration and the like. The system may thus learn a structural understanding of the motor. Finally, a classification may be learned for the motor, e.g., current or predicted emission. The emission may be reported to an operator of the motor, e.g., car motor, or may be used to control the motor, e.g., reduce speed to reduce emissions, etc.

The classifier may include processor, storage and communication interface similar to device 160. For example, device 160 may be configured both as a classifying device and as a planning device.

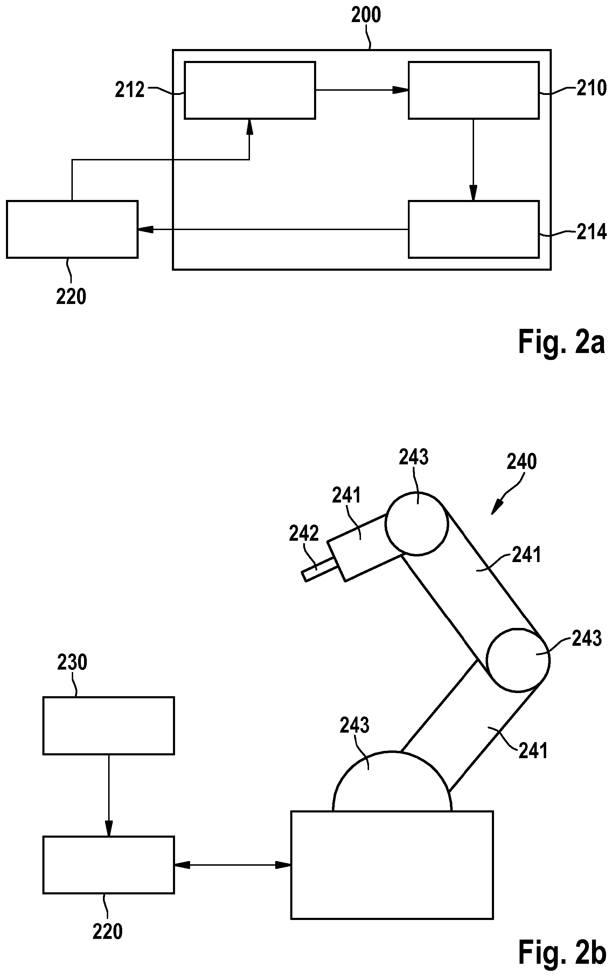

**Figure 2a** schematically shows an example of an embodiment of a physical system 200. Shown are movable parts 210, which may be known movable parts such as joints, linkages, blocks, axes, wheel, gears, etc. In particular, the movable parts may comprise multiple joints, the actions comprising rotating and /or translating a joint. The joints may be connected to other moving parts, e.g., linkages. For example, joints may be prismatic, e.g., a slider, only translation; cylindrical, e.g., rotating and sliding; or revolute, e.g., only rotation.

Figure 200 also shows an actuator 212 and a controller 220. Actuator 212 is configured to receive a control signal from controller 220 to cause change in the location parameters of the movable parts. For example, some part may be shifted, turned, or the like. Finally, a sensor 214 or sensor system 214 provides feedback on the state of the physical system. For example, sensor 214 may comprise one or more image sensors, force sensors, etc.

The physical system is a robot. For example, the physical system may be a vehicle, a domestic appliance, autonomous driving car, a power tool, a manufacturing machine, etc., typically under computer-control. The planner may be used to control a system, in which the planning task is discrete, while observations are continuous and high-dimensional.

For example, the physical system may be a vehicle, e.g., a car, e.g., configured for autonomous driving. Typically, the car makes continuous observations, e.g., distance to the exit, distance to preceding vehicle, exact position inside a lane, etc. A controller of the vehicle may be configured to determine how to act and where to drive, e.g., change to other lane. For example, the further may be used to learn a state of the car in it environment, while the driving actions that the car may take influence the state of the car.

For example, the physical system may be a manufacturing machine. For example, the manufacturing machine may be arranged with a discrete set of actions, possibly with continuous parameters. For example, the actions may comprise a tool to use and/or parameters for a tool, e.g., an action drill at a specific location or angle, etc., For example, the manufacturing machine may be a computer numerical control (CNC) machine. A CNC machine may be configured for the automated control of machining tools, e.g., drills, boring tools, lathes, etc., or of 3D printers by means of a computer. A CNC machine may process a piece of material, e.g., metal, plastic, wood, ceramic, or composite, etc., to meet specifications.

The observable state of the manufacturing machine is often continuous, e.g., the noisy location of the drill, a noisy location of the part that is manufactured. An embodiment may be configured to plan how to create the part, e.g., first drill at that location, then do some second action, and so on.

**Figure 2b** schematically shows an example of an embodiment of a robot arm 240. In an embodiment, the physical system comprises a robot arm. An example, of a robot arm is shown in figure 2b. For example, the robot arm may comprise one or more links 241, tools 242, and joints 243. The robot arm may be controlled, e.g., by a controller 220, e.g., to actuate the joints. Robot arm 240 may be associated with one or more sensors, some of which may be integrated with the arm. A sensor may be a camera, e.g., a camera 240. The sensor outputs, including optionally, an image, may be an observable state of the robot arm.

The movement of the robot arm may be restricted in various ways. For example, not all settings of the movable parts, e.g., joints, may be possible. For example, movement of the arm may be restricted by the environment. For example, other machines, barriers, and safety restrictions may restrict possible movement. Furthermore, some movements may be physically impossible given the specifications of the system. The system may also comprise multiple robot arms, e.g., two or more. Possible movement of one of the arms may be restricted by the position of the other arm. This is no problem as the combined positon of the two arms may be represented in a (observable) state.

For example, a manipulation task may be solved for the robot arm, which may comprise multiple joints and links that can be rotated and translated. The robots job could be to pick up an object and move it to some position. Even though observations may be continuous and high-dimensional, e.g., states of all joints, sensor measurements such as camera images, etc., there often exist discrete graphs that can solve the planning task. Such a planner may be learned using an embodiment. Furthermore, even if an MDP may not perfectly represent a physical system, e.g., because the observable states and/or action may be continuous, whereas the MDP is discretized, a learned MDP nevertheless gives a good way to generate actions that will bring a goal closer, as it provides a good approximation of the behavior of the system. For example, some states can be aggregated to joint latent states if they behave similarly when the same action is applied.

Instead of applying a planner such as an MDP solver, the control may be performed without, e.g., and even without discretization. For example, the transition function may be used directly, to predict the result of a prospective action. The action may be sampled from a continuous space. For example, the action may be randomly selected, or obtained from a third source, e.g., from an external planner, or from the user. The predicted effect of applying the action may be used to allow or block the action, e.g., for safety, e.g., in case a part of the physical system would come within a threshold distance of some other object.

**Figure 1b** schematically shows an example of an embodiment of a machine learning device 110. For example, machine learning device 110 may be configured to learn an encoder function and a transition function for a physical system. For example, the encoder function may encode a state of the physical system, while the transition function learns to predict how an action on the physical system will affect the state as encoded. Accordingly, a better encoding function may be learned which represents information that enables prediction of actions on the system.

The encoder and transition function may be used to learn a planner for the physical system, e.g., to control the physical system to reach some goal state. For example, machine learning device 110 may be configured to learn a planner for a physical system. For example, the planner may comprise a Markov decision problem. For example, the planner may comprise a Markov graph and transition probabilities, which may be adapted for solving a planning problem. The physical system may be arranged with multiple observable states and a set of multiple actions which may be performed on the physical system to cause a state transition.

Machine learning device 110 may comprise a storage 112 configured to store training data. The training data may comprise multiple pairs of an action and a corresponding observable state transition from a first observable state to a second observable state. For example, the physical system, e.g., a robot arm, may be observed while in action. The observable state s before an action $a$ being performed and the observable state s' may be measured. For example, the observable states may be obtained from a sensor, and the action may be obtained from a controller. The action $a$ and the state transition $s \rightarrow s'$ may be recorded in the training data. For example, the states s and s' may comprise a picture of the system before and after action $a$ was taken. For example, action $a$ may be to increase an angle with some predetermined amount, increase a voltage, a current, etc. The actions may be discretized beforehand to a finite set of action. This is not needed, and instead the actions as available in the training data may be used. For example, observable states and actions may be obtained by sampling the physical system. For example, sensor readings and/or actuator reading may be obtained at a certain frequency, e.g., at 1 Hz, 10 Hz, 100 Hz, etc., the sensor readings may be comprised in an observable states, while a delta in the actuator reading may represent an action. Actions may be rounded to keep their number small.

For example, system 110 may comprise action storage 141 for storing actions, observable state storage 142 for storing observable states and a latent state storage 143 for storing latent states. These storages may be part of the memory.

System 110 may be configured for a pre-training phase to learn a latent representation of the observable states. For example, the latent representations may encode information about closeness of observations such that latent transitions correspond to transitions of real world observations, so that the latent representations may later be used for planning.

For example, system 110 may comprise encoder function 131 which may be configured to map an observable state to a latent state in a latent space, and a latent transition function 132 which operates on the latent space. The latent transition function 132 may be configured to map an action and a first latent state to a second latent state. The encoder function 131 and the latent transition function 132 are both machine learnable functions and are trained on the training data so that the latent transition function aligns with observable state transitions in the training data. For example, at least one of the encoder function and the latent transition function are neural networks; they may both be neural networks, e.g., a convolutional network.

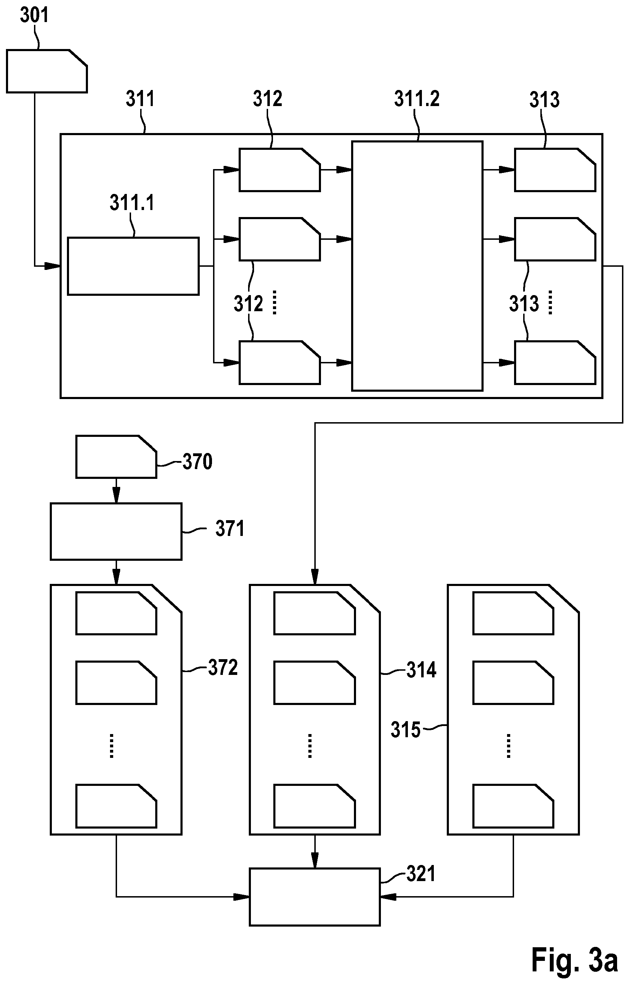

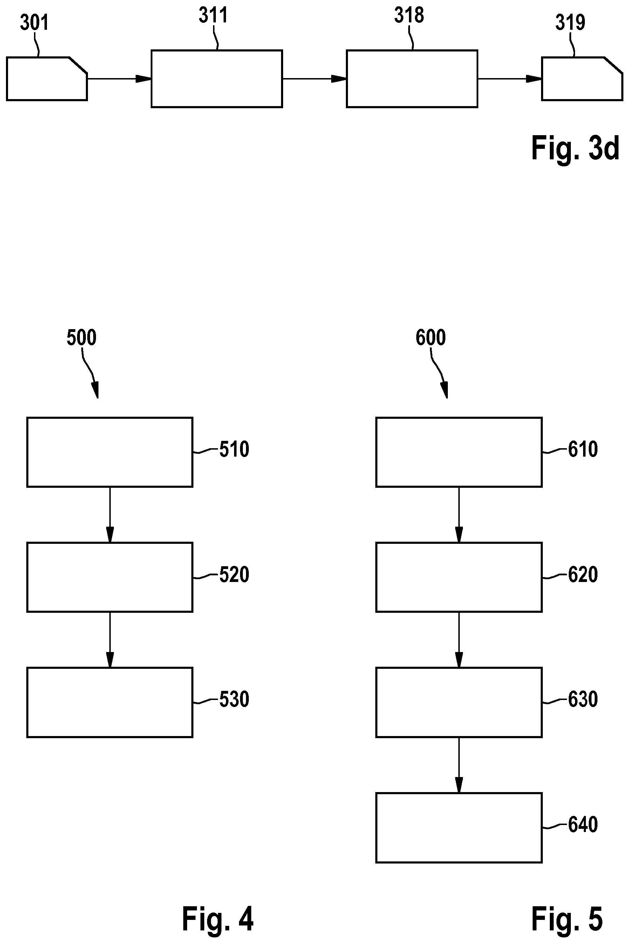

**Figure 3a** schematically illustrates an example of data structures in an embodiment of a machine learning device. Shown in figure 3a is sensor data 301 representing the state of the physical system. For example, the sensor data may be an element of an observable state space. For example, the observable state space may be modelled as a vector space. For example, an observable state, e.g., the sensor data, may be encoded as the concatenation of the sensor outputs. For example, machine learning device may comprise a sensor data interface for receiving the sensor data, e.g., from sensors or from storage where the output of the sensors was previously stored.

Encoder function 311 maps an element of the observable state space to a latent space. Shown in figure 3a, is sensor data being mapped to latent state representation 314. Also the latent state space may be vector space. Typically, the latent state space may be of a lower dimension than the observable state space. Acting on the latent space is a transition function 321. Transition function 321 learns the likely effect of an action on a state as encoded in a latent representation.

Mathematically, one may use the following notation:

Training data, also referred to as the 'Experience Buffer': $\mathcal{B} = \{(s_t, a_t, s_{t+1})\}_{l=1}^T$

States $: s_t \in \mathcal{S}$

Actions: $a_t \in \mathcal{A}$

Latent representation of state st: $z_t \in Z$

Latent encoder: $E: S \to Z$

Latent transition model: $T_\phi: Z \times A \to Z$

The buffer may be learned in an off-policy setting, e.g., obtained from an exploration policy. For example, the experience buffer $\mathcal{B} = \{(s_t, a_t, s_{t+1})\}_{t=1}^T$ contains $T$ tuples of states $s_t \in \mathcal{S}$, actions $a_t \in \mathcal{A}$, and follow-up states $s_t \in \mathcal{S}$, which are reached after taking action $a_t$. This buffer does not consider rewards, but these could be included as well, e.g., in the buffer. In an embodiment, a compact, latent representations $z_t \in Z$ of environment states $s_t \in \mathcal{S}$ is learned that discards information which is not necessary to predict the latent representation of the follow-up state $z_{t+1} \in Z$ after taking action $a_t$. For example, the encoder $E: \mathcal{S} \to \mathcal{Z}$ may map observed states to latent state representations and the transition model $T: \mathcal{Z} \times \mathcal{A} \to \mathcal{Z}$ may operate solely on latent state representations. The buffer may be used for training the systems, e.g., tuning the parameters of the neural networks. The buffer may also be used to generate a Markov decision problem as explained herein. The buffer is not required in a use phase after the training phase, e.g., by using the encoder in a classifier or by using an encoder and optionally a transition function in a planner.

After sensor data 301 has been received an encoder function 311 is applied to sensor data 301. Encoder function 311 may be implemented in an encoder, e.g., an encoder unit. For example, the encoder function may be implemented in computer instructions stored in a storage, e.g., an electronic memory and executed by a processor system. For example, the encoder function 311 may be applied to sensor data 301, which may represent the physical system in observable data, e.g., sensor readings, one or more images, e.g., as obtained from one or more sensors, and represent it as latent representation 314 of the physical system. Typically, the dimensionality of latent representation 314 will be lower, typically much lower, than of sensor data 301. The physical system may be computer-controlled physical system.

Encoder function 311 may be configured for mapping the sensor data to a latent representation of the state of the physical system. The encoder function may comprise one or more neural networks configured for extracting multiple objects from the sensor data and for mapping the multiple objects to the latent space. The latent representation of the state of the physical system may comprise multiple latent object representations.

In an embodiment, the encoder function 311 may be split into two parts, e.g., modules. The first part may be an object extractor 311.1. For example, the object extractor may comprise a neural network, e.g., a CNN-based object extractor. The first part of the encoder function may be configured for extracting multiple objects from sensor data 301. The second part may be an object encoder 311.2 configured for mapping the multiple objects to the latent space, e.g., to a latent representation of the state of the physical system. The second part of the encoder function may also comprise a neural network, e.g., a MLP-based object encoder. The first part may be pre-trained, or partially pre-trained, e.g., before being trained together with the second part.

For example, object extractor 311.1 may have multiple object outputs. In figure 3a, the object outputs are labelled 312. An object output 312 of the multiple object outputs may be configured to indicate an object in the sensor data. Object encoder 311.2 may map the multiple object outputs to latent object representations 313 in the latent space. Typically, the number of object outputs 312 will be equal to object encoding 313; this is not necessary though. Shown in figure 3a is an embodiment in which object encoder 311.2 is configured with multiple object inputs to receive the object outputs 312 and with multiple latent object representations as output. To reduce parameters, object encoder 311.2 may also be configured to operate on fewer objects, e.g., to receive a single object representation 312 and to transform it in a single latent object representation 313. In that case, encode 311.2 may be applied multiple times.

For example, the object extractor part 311.1 may operate directly on image-based observations 301 from the environment, with N feature maps in its last layer. Each feature map may correspond to one object slot, e.g., to one object representations 312. After the object extractor part 311.1, the feature maps may be flattened into a vector representation and feed each flattened representation in parallel into the object encoder 311.2. The object encoder 311.2 preferably shares weights across objects.

The first and second part may be combined into single neural network but the modular approach allows, the second part to be applied in turn to the multiple outputs of the first part. This allows sharing of parameters for the different output of the first part. This leads to faster learning and a smaller neural network representation. This is especially the case, if the different objects in the object slots share similarities. For example, experiments on manipulation of similar blocks showed a significant improvement in this regard.

If there are multiple types of objects, there may be multiple second parts, e.g., one for each type. For example, a first type of second part may be applied to a first number of object outputs of the first part, and a second type of second part may be applied to a second number of object outputs. The first part may also output an object type, or the object type may be determined from the indicated object, e.g., using a look-up table. Using the determined type the second part of the correct types may be applied to the corresponding object outputs of the first part.

For example, in an embodiment, the physical system may comprise a robot, e.g., a robot arm. Identified objects may include such elements as joints, and linkages of various types. For example, the first part may find, 2 joints and 3 linkages. A second part specialized for joints may then be applied to the 2 identified joints, while a second part specialized for linkages may then be applied to the 3 identified linkages. The number of joints and linkages may differ between applications of the system.

The latent representation of the state of the physical system may comprise multiple latent object representations. For example, the latent representation of the state of the physical system produced by encoder 311.2 may comprise a tuple of object representations: $(z_t^1, ..., z_t^N) = E(s_t)$ with $z_t^n \in \mathcal{Z}_n$. For example, the space $Z_n$ may be a vector space. For example, in an embodiment one may set $\mathcal{Z}_n = \mathbb{R}^k$, where k is a hyper parameter. For example, a latent representation of a single object may be a vector, with k coefficients; the representation of the physical state, may be N such vectors. The latent representation 314 of the physical system produced by encoder function 311 is shown in figure 3a; note latent representation 314 comprises elements, e.g., vectors that correspond with objects in the physical system.

Figure 3a further shows a transition function 321. After sensor data 301 has been encoded by encoder function 311 it may be further processed by transition function 321. Transition function 321 may be implemented in a transition unit. For example, the transition function may be implemented in computer instructions stored in a storage, e.g., an electronic memory and executed by a processor system.

Transition function 321 may be applied to a latent representation 314 of the state of the physical system and to action data 372 representing an action performed on the physical system. Transition function 321 may comprise a neural network producing a predicted latent representation of the state of the physical system having the action performed on it.

The neural networks in parts 311.1 and 311.2 and in transition function 321 may be trained from the buffer. By predicting the effect of actions on the physical system and/or by forcing an object based representation, the system learns a representation that corresponds well to the way the physical system operates.

An advantage of this system is that a relational and object-oriented model of the environment is learned that operates on a factored latent state space $Z = Z_1 \times ... \times Z_N$ where $N$ is the number of available object slots.

In an embodiment, the action space may also be factorized, e.g., as $\mathcal{A} = \mathcal{A}_1 \times ... \times \mathcal{A}_N$. This is not necessary though, for example, transition function 321 could receive an action in any suitable representation together with an object factorized latent state 314. The object factorization may be an encoding of the action based on knowledge of the physical system. In such an embodiment, it is not required that action-slots in $\mathcal{A}_n$ correspond to object slots in $\mathcal{Z}_n$. However, in an embodiment, there is such a correspondence.

An object-factorized action space $\mathcal{A} = \mathcal{A}_1 \times ... \times \mathcal{A}_N$ improves independent representation of the objects, and it allows for efficient sharing of model parameters across objects in the transition model. For example, the transition model may combine action $a_1$ to the encoded object representation $z_1$, etc.. Clearly, this will work best if the object to which action $a_1$ and the object to which representation $z_1$ refer are the same object in the physical system. Interestingly, this releationship can be learned by the system. In the beginning of training, the system might extract random features from the environment, which might not correspond to any or the right object (in this case the first one). At some point the full system is trained to encode object states from observations as well as to predict transitions in the latent space. However, this is learned best if the extracted object representation $z_1$ corresponds to $a_1$. Therefore, during training the model learns an object extractor that places features of the first object into the latent representation of the correct object to allow for predicting action-dependent transitions.

After the encoder 311, we may have a latent state description $z_t^n \in \mathcal{Z}_n$ and an action $a_t^n \in \mathcal{A}_n$ for every object in the scene. Actions may be represented as one-hot vectors or a vector of zeros if no action is applied to a particular object, but other choices are possible, e.g., for continuous action spaces.

For example, in an embodiment, action $a_1$ may correspond to a joint_1. In this case, the system will learn to identify as object 1, the joint labeled in the observable world as joint_1. For example, the action may be indicate an increase in an angle, or may indicate a position to which the joint is to move. For example, an action may indicate that an object is to move in some direction, e.g., as far as it will go, or be a predetermined amount, etc.

One way to obtain an object factorization of the action that is compatible with the object factorization of encoder 311 is to use an action encoder 371. Action encoder 371 may receive an action as input and produce an object factorized action 372 as output. Action encoder 371 may comprise a neural network, which may be trained together with the encoder 311 and transition function 321. For example, action encoder 371 may be used if the action 370 includes some global action. For example, an action for a motor may comprise to increase or decrease the gas, or to brake, e.g., by some amount, etc. In this case, it is not directly clear how such a global operation impacts the objects in the state.

Action encoder 371 is optional. In an embodiment, the action is provided in the form of action 372, e.g., already factorized to objects. This has the advantage that the system will learn the object factorization implied by the actions.

Object factorization ensures that each object in the physical system is independently represented and it allows for efficient sharing of model parameters across objects in the transition model. This serves as a strong inductive bias for better generalization to novel scenes.

In an embodiment, the transition function may comprise as a graph neural network. A graph neural network allows one to model pairwise interactions between object states while being invariant to the order in which objects are represented. The transition function 321 may take as input the tuple of object representations $z_t = (z_t^1, \ldots, z_t^N)$ and actions $a_t = (a_t^1, \ldots, a_t^N)$ at a particular time step: $\Delta z_t = T(z_t, a_t)$.

The transition function $T(z_t, a_t)$ may be implemented as a graph neural network (GNN), e.g., $T(z_t, a_t) = GNN(\{[z_t^n, a_t^n]\}_{n=1}^N)$. The graph neural network may take the concatenation $v_t^n = [z_t^n, a_t^n]$ as input node features. That is, a node of the graph neural network may have as input node features the combination of a latent object representation for one object, taken from latent state 313 and a latent action representation for one action on that object, taken from latent action 372. Instead of the concatenation $v_t^n = [z_t^n, a_t^n]$ on could also use the concatenation $v_t^n = [z_t^n, a]$ as input node feature; for example this may be used if the action is not object-factorized.

The transition function 321 may predict updates $\Delta z_t = (\Delta z_t^1, \ldots, \Delta z_t^N)$. The object representations for the next time step may be obtained via $z_{t+1} = (z_t^1 + \Delta z_t^1, \ldots, z_t^N + \Delta z_t^N)$. The GNN may comprise node update functions $f_v$ and edge update functions $f_e$ with shared parameters across all nodes and edges. These functions may be implemented as neural networks, e.g., as MLPs and may take the following form:

$$e_t^{(i,j)} = f_e\left(v_t^i, v_t^j\right)$$

$$\Delta z_t^j = f_v\left(v_t^j, \sum_{i \neq j} e_t^{(i,j)}\right)$$

where $e_t^{(i,j)}$ is an intermediate representation of the edge or interaction between nodes i and j. This corresponds to a single round of node-to-edge and edge-to-node message passing. Alternatively, one could apply multiple rounds of message passing, but in experiments this was found not to be necessary. Note that this update rule corresponds to message passing on a fully connected scene graph without self-connections, which is O(N2). This can be reduced to linear complexity by using a k-nearest neighbor graph in the latent state space. The output of the transition function for the n-th object is denoted as $\Delta z_t^n = T^n(z_t, a_t)$ in the following.

In the training of the encoder and training functions the following observations may be used to design a loss functions. The latent representations that should allow for planning and should encode information.

The above networks, in particular the embedding function $(z_t^1, \ldots, z_t^N) = E(s_t)$ and transition model $\Delta z_t = T(z_t, a_t)$, may be trained in the above mentioned object-oriented factorized representation such that the embedding is consistent with the experience buffer $\mathcal{B} = \{(s_t, a_t, s_{t+1})\}_{t=1}^T$. This means that the embedding should be consistent with the transition model, e.g. when encoding $E(s_{t+1})$, it should match $z_t^n + \Delta z_t^n = z_t^n + T(E(s_t), a_t)$. For doing this, we can minimize the overall energy of a state-action-state triple: $H = d(z_t + T(z_t, a_t), z_{t+1})$, where $d(\cdot, \cdot)$ denotes the squared Euclidean distance. This additive form of the transition model provides a strong inductive bias for modeling effects of actions in the environment as translations in the abstract state space. Alternatively, one could model effects as linear transformations or rotations in the abstract state space, which motivates the use of a knowledge base embedding method.

The loss function may have terms that cause one, or more, or all of the following:

1. subsequent observations should be close in latent space,
2. latent transitions correspond to transitions in the real world and the embedding into latent space, and
3. two random samples should be far from each other to spread samples over the hypersphere observations.

Note that these options are not all required. For example, the first option could be omitted. It could be realized, by including a part in the loss function that enforces this. To accommodate the third option, one could include an energy-based hinge loss. A possible loss function may be:

$$L = d(z_t + T(z_t, a_t), z_{t+1}) + \max\big(0, \gamma - d(\tilde{z}_t, z_{t+1})\big).$$

With $d(.,.)$ being a distance metric, such as squared Euclidean distance. This loss function induces that the latent transition model is consistent with encodings of subsequent samples, while two random samples should have large distances as induced by the hinge loss. This is induced by the $-d(\tilde{z}_t, z_{t+1})$ term inside hinge loss. The hinge loss restricts that the distance between random samples are maximized and encodings are pushed apart.

In the above equation an energy for negative samples $\tilde{H} = -d(\tilde{z}_t, z_{t+1})$ with a corrupted abstract state $\tilde{z}_t = E(\tilde{s}_t)$. $\tilde{s}_t$ is sampled randomly from the experience buffer. It was found that taking negative samples from within the same episode leads to faster and more stable convergence.

The energy function may be changed to take the factorization of the abstract state space into account, which yields the following energy for positive triples:

$$H_o = \sum_{n=1}^{N} d(z_t^n + T^n(z_t, a_t), z_{t+1}^n)$$

and for negative samples:

$$\widetilde{H}_o = -\sum_{n=1}^{N} d(\tilde{z}_t^n, z_{t+1}^n)$$

where $\tilde{z}_t^n$ is the n-th object representation of the negative state sample $\tilde{z}_t = E(\tilde{s}_t)$. The overall contrastive loss for a single state-action-state sample from the experience buffer then takes the form:

$$L = H_o + \max\big(0, \gamma + \widetilde{H}_o\big)$$

As pointed out, the encoder can be set up with images as inputs, e.g., using a CNN as an object extractor. For other sensor data different object extractors could be useful, e.g. one could in general use an MLP for vector-based data representations, or a set encoder for set-based representations.

This loss function induces that the latent transition model is consistent with encodings of subsequent samples, while two random samples should have large distances, e.g., as induced by the hinge loss.

It can be desirable to construct a latent space with specific structure, e.g. that it is easier interpretable, or that actions should only have a local effect on the latent state. The translation is one example for this. For example, instead of learning transition function $T_\phi$ directly, one may define $T_\phi(z_t, a_t) = z_t + T'_\phi(z_t, a_t)$ and learn $T'_\phi$ instead. The additive part $z_t + T'(z_t, a_t)$ enforces transitions to be translations in latent space.

The encoder function is improved by training together with the transition function. Once the encoder is trained it may be used, with or without the transition function. For example, in an embodiment, a classifier function may be applied to a latent representation of the state of the physical system. The classifier function may comprise a neural network. The classifier function may be trained on a buffer of known classifications, e.g., of the form $(s_i, c_i)$, wherein $s_i$ is an observable state, e.g., sensor data such as sensor data 301 and $c_i$ is the corresponding classification. The encoder function may be applied to the observable states $s_i$ to obtain latent states. The classifier can be trained on the pairs of latent states and classification labels. The classifier may be an MLP.

For example, in an embodiment, the physical states may be used for planning of the physical system, e.g., for motion planning. For example, one or more actions may be found that cause a first latent state to be transformed to a goal latent state.

For example, sensor data representing a current state of the physical system may be received and mapped to current latent state with the trained encoding function. An action may be obtained from a policy mapping which is to be applied to the current observable state to reach a latent goal state from the latent representation of the state of the physical system, and generating a signal for the physical system to transition from the current observable state according to the obtained action. The policy mapping may be obtained by solving a Markov decision problem.

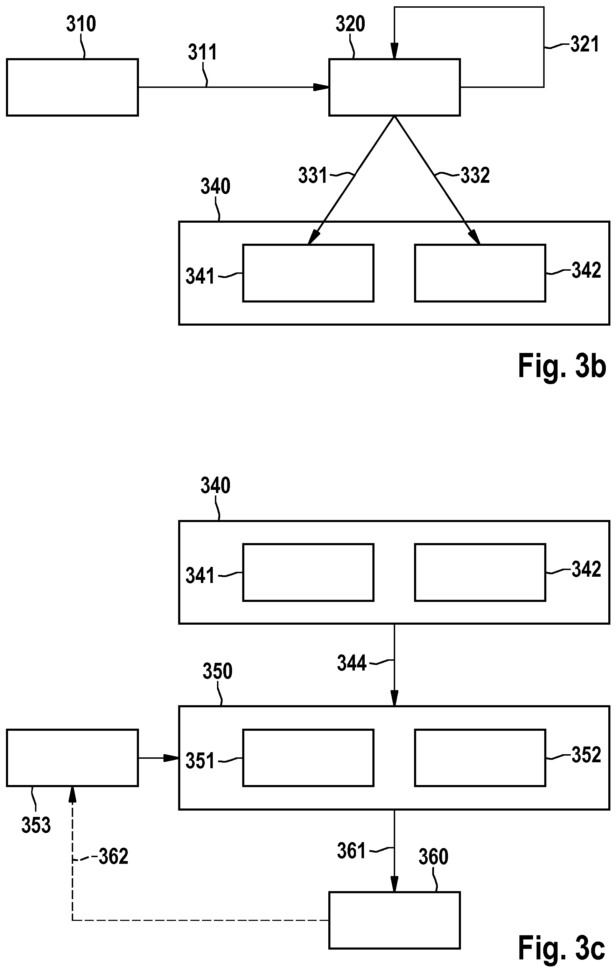

**Figure 3b** schematically illustrates an example of data structures in an embodiment of a machine learning device. Shown in figure 3b is the observable state space 310, latent space 320. Encoder function 131 maps 311 an element of the space 310 to a latent space 320.

Once the encoding and transition functions have been learned the latent representation provide a good representation of the way actions operate on the physical system. To apply a planner such as a Markov decision planner, a discretization is performed. System 110 comprises a discretizer 133, e.g., a discretization unit. Discretizer 133 is configured to discretize the latent space by selecting a set of vertices in the latent space, and to define a Markov decision problem on the set of vertices. The transition probabilities are obtained from the latent transition function.

For example, figure 3b illustrates this. Once observable states are suitably encoded in the latent space, a discretization 331 is performed on the latent space to obtain a set of vertices 341. Moreover, transition probabilities, e.g., a probability transition function, are assigned 332. For example, the transition probabilities may indicate given a first state s and an action $a$, the probability of entering state s'. The set of vertices together with the probability assignment define a Markov decision problem. For example, the Markov decision problem may be stored in the Markov decision problem storage 144.

There are several ways in which one could select the vertices for set 341 in the latent space. For example, one could select random points from the latent space. However, this runs the risk that points are selected that do not correspond to physically realizable states. Another option is to manually select observable states that give a good representation of the possible states of the physical system, and encode these into the latent space. However, this may be tedious, if the number of state is large, and moreover runs the risk of omitting important states. Good results have been obtained by taking the latent states that correspond to the observable states in the training data as the vertices for set 341. If desired the set may be reduced in size by taking a sub-set, for example, a randomly selected subset. In that way, the discretized state space only comprises states that can actually be encountered when actuating the system.

Duplicates in the selected sets may be removed as they do not provide additional information. A selected latent point that is close to another selected latent point, e.g., within a distance bound, may also be removed. The latter step reduces the size of the set 341. Nevertheless, the latter step did not turn out to be required in experiments, so that it is optional. The random sampling technique is beneficial as it provides both good coverage of the latent space and higher density of discrete latent states that the agent is more likely to encounter.

After training then encoder and transition function, e.g., after pre-training, one can define edges between states as based on closeness in latent space from the state predicted by the learned transition function, e.g., under the metric used for pre-training. One way to do this is by using a temperature-softmax over the distances to all other states in the set. These edges may be denoted as the transition function $T(s,a,s')$. For example, a transition probability for an action from a first vertex in the set of vertices to a second vertex in the set of vertices may comprise applying the latent transition function to the first vertex and action to obtain a predicted vertex and computing a distance in the latent space between the predicted vertex and the second vertex. For example, one may compute a distance in the latent space between the predicted vertex and all other vertices in the set, and scale accordingly, e.g., in a softmax.

In this way, a Boltzmann distribution over potential successor states is defined, so that the likelihood is high, if there is high similarity between a successor state and the potential transition state. Other distance functions may be used instead.

Scaling probability based on the distance from the predicted result of applying action $a$, has the advantage that it is no problem that the learned transition function does not necessarily end up in one of the selected discrete states.

The resulting Markov problem is versatile as no information of goal states needs to be included, when learning the encoder and transition function. For example, to plan towards a particular goal, e.g., to a particular latent state in the selected set, that is to say to an observable state that corresponds to it, one may add a reward function to the Markov problem, and possibly one or more additional vertices. An observable reward function may be learned as well, and this may in fact improve the learning of the encoder and transition function. Interestingly, if the learned reward function is later replaced by a new reward function, e.g., to plan towards a different goal, or for a different reward, the encoder and transition functions do not need to be relearned.

For example, a reward function may assign a reward for each of the state in the set, e.g., set 341. For example, the reward function may be learned for the latent space and the assigned to the vertices in set 341.

For example, the reward may be zero everywhere except in one or more desired states. In the desired states the reward may be 1, or may be proportional to the desirability of a state. Furthermore, one may add an absorbing state to the Markov decision problem, into which absorbing state the Markov decision problem transitions after entering the goal state. Such an absorbing state avoids that the planner tries to repeatedly enter the goal state. A goal state may correspond to one of the states in the selected set of vertices. Likewise, the starting state, e.g., a current state of the physical system, may correspond to a vertex in the set of vertices. However, this is not needed if a goal or starting state is desired that is not in set 341, then it can be added, by encoding the observable start of goal state and add it to the vertices. For example, one may directly add a goal state by encoding it: $z_q = E_\theta(s_q)$. The transition probabilities for the new vertices may be added in the same way as above, e.g., using the learned transition function.

Once a reward function, e.g., for a goal state is defined, the Markov problem can be solved. Such a solution would indicate an action to take for each vertex in the set, including the starting state. For example, the Markov decision problem may be solved to obtain a policy mapping, the policy mapping from the latent states to actions to reach a latent goal state. After defining the latent MDP, one can use the standard formulation of the Value Iteration algorithm, e.g.,

$$Q_a^{(l+1)} = T^{(a)}\left(R + V^{(l)}\right)$$ . The resulting Q-values are given by VI-updates $$V^{(l+1)} = \max_a Q_a^{(l+1)}$$ where $V^{(0)} = 0$.

However, one may use any of the many variant algorithms for solving an MDP problem.

Completing the MDP with one or more of a goal state, a starting state and a reward function, and/or solving the corresponding MDP may be done in the machine learning device 110 or in the machine learning planner 160, or both.

As pointed out above, the latent space may be any conventional latent space, e.g., a multi-dimensional space over the real numbers. In such an unbounded vector space, system 110 may potentially learn undesired solutions, e.g., pushing all latent points maximally apart. This can be avoided, e.g., with a term in the loss function that counter this tendency, e.g., a hinge loss.

Adding the hinge loss to the loss term, softly enforces a maximum distance constraint, but cannot guarantee that this constraint will be satisfied. Consequently, the loss function might sacrifice constraints against consistency or consistency against constraints. This can yield undesirable effects that are hard to interpret, when learning graph embeddings.

In an embodiment, the latent space is a topologically compact space, in particular, a hypersphere, e.g., the unit hypersphere. A hypersphere is the set of points in a vector space of a given dimension, at a constant distance from a given point called its center.

There are several ways to obtain a hypersphere as a latent space. For example, one may normalize the output vector of a neural network to have unit length, e.g., one. It is also possible to softly penalize violations; or to combine the two approaches.

For example, the encoder may map observable states to a point on the unit hypersphere. As the space is compact, observations are embedded into a bounded space with bounded distances. Thus the space itself induces a hard constraint on the maximum distance, a hinge loss is not needed. For example, a loss function might only comprise terms for closeness of subsequent latent states, the transition consistency, and distance maximization (e.g., for spreading the latent space embeddings over the hypersphere).

For example, loss function that one may use, without a hinge loss is the following:

$$\mathcal{L}(z_t, a_t, z_{t+1}, z_x) = d(z_t, z_{t+1}) + d\left(z_{t+1}, T_\phi(z_t, a_t)\right) - d(z_t, z_x)$$

The sample $z_x$ is the latent representation of a random observable state in the training data. With d being a distance metric, such as squared Euclidean distance, or cosine distance, .e.g., cosine similarity. The latter is a good choice if the latent space is a hypersphere; or for the part of the latent space which is a hypersphere.

Furthermore, the hypersphere embedding allows for using cosine similarity between latent space embeddings, which more naturally measure distances between rotations. Hence, this hypersphere is more suited to embed observations of rotations. For example, in many robotic problems one has to embed observations that consist of angles, e.g., due to the state space of robot joints. Cosine similarity on the hypersphere turns out to be more suitable for such types of observations.

For example, one may compute a distance in the latent space between the predicted vertex and all other vertices in the set, and scale accordingly, e.g., in a softmax.

For example, a probability transition function T may be modelled as:

$$T(s' = j \mid s = i, a) = \frac{\exp\left(z_j^T z_i^{(a)}/\tau\right)}{\sum_{k \in \mathcal{S}} \exp\left(z_k^T z_i^{(a)}/\tau\right)}$$

The formula above denotes the probability to transition from a state i to a state *j* by applying action *a*. The state $z_i^{(a)}$ denotes $z_i^{(a)} = \frac{T_\phi(z_i,a)}{\|T_\phi(z_i,a)\|}$ , in which $T_\phi(z_i,a)$ denotes the transition predicted by the learned transition function. In this way, a Boltzmann distribution over potential successor states is defined, so that the likelihood is high, if the cosine similarity between a successor state and the potential transition state is high. Other distance functions may be used instead of cosine similarity.

Instead of a hypersphere, other choices for the latent space are possible, for example, the latent space may be a product of a hypersphere and a further space, or a product of two or more hyperspheres, e.g., a torus. The latent space may be a product of a hypersphere and a conventional vector space. The distance function may then comprise a cosine similarity.

**Figure 1d** schematically shows an example of an embodiment of a machine learning planner 160. The machine learning planner may be configured to plan for the physical system, e.g., to plan movement. The machine learning planner does not need to perform the pre-training phase. For example, the machine learning planner may be configured with a trained encoder and transition function. For example, the machine learning planner may be configured with the Markov decision problem or with a policy computed for it.

Machine learning planner 160 may comprise a Markov decision problem storage 184 configured to store a set of vertices in a latent space to define a Markov decision problem. Storage 184 may also store transition probabilities among the vertices. The transition probabilities could instead be computed by system 160 from the vertices and the transition function, e.g., as indicated above.

Machine learning planner 160 may comprise an encoder function, e.g., as trained by system 110. The encoder function may be configured to map an observable state to a latent state in the latent space. For example, Machine learning planner 160 may comprise a latent state storage 183. The encoder may be used to map a new observable state into the latent space. For example, this may be done to add a new goal or starting state to the set of vertices, such as a starting state, current state, etc.

Machine learning planner 160 may comprise a latent transition function 172, e.g., as trained by system 110. The latent transition function 172 may be used to define transition probabilities between vertices, and in particular between added vertices, such as an added goal vertex and the other vertices.

Machine learning planner 160 may be configured to obtain a current observable state of the physical system and/or a goal observable state of the physical system, and mapping the current observable state and/or the goal observable state to a current latent state and/or a goal latent state. For example, planner 160 may comprise a sensor to obtain the current observable state. For example, the current observable state and/or a goal observable state may be obtained from storage. Machine learning planner 160 may comprise an observable state storage 182. Likewise, a reward function may be added, etc., as indicated above.

Once the MDP is fully determined a policy mapping for the Markov decision problem may be obtained to reach the goal latent state from the current latent state. For example, the VI algorithm may be used to compute the policy. From the policy one may obtain an action that may be applied to the current observable state, to bring it closer to the goal state. For example, planner 160 may comprise a Markov planner 174 for solving an MDP and an action storage 181 for storing an action.

Finally, a controller 175 of planner 160 may be configured to generate a signal for the physical system to transition from the current observable state according to the obtained action.

**Figure 3c** schematically illustrates an example of data structures in an embodiment of a machine learning planner. Shown is the Markov decision problem 340 as obtained from a training device such as system 110. Markov decision problem 340 comprises a set of vertices 341 and transition probabilities 342, e.g., a probability transition function.

The problem may be modified 344 to obtain an adapted Markov decision problem 350. For example, additional vertices 353 may be added to set 341, to obtain set 351. The transition probabilities may be extended with transition probabilities between the added vertex/vertices and set 341, thus obtaining adapted transition probabilities 352. Also a reward function may be added. The added vertices may include a goal state, a current state, an absorbing state, etc. An encoder function may be used to map an observable state to a latent state in the latent space.

Solving the adapted MDP, e.g., with a Markov decision problem solver 361 leads to a policy and in particular to an action 360 for the current state. The policy may be executed, e.g., until the goal is reached. For example, at each observable state the action in the policy for the corresponding latent state may be executed. This approach works especially well if the physical system has clearly demarcated states itself.

If the relationship between observable states and the latent states is less clear, e.g., in case of continuous observable states, there are several approaches that can be taken. For example, one may ensure that the current state of the physical system is represented in the MDP, e.g., by encoding the current state and including the encoded latent state in the selected set of vertices. In that way, the policy that is obtained will include an action at least for the current state. After that action has been taken, one may observe the new state of the physical system and map it to the set of vertices 351. There are several approaches that may be taken. For example, one may set the new latent state in set 351 to the vertex in the latent that is closest to the new observed state after encoding. For example, one may obtain a Q value for the added state by interpolating Q values for other states, e.g., based on distance in the latent space. The advantage is that one does not need to solve the MDP. One could also add a new point to the set to represent the new state together with new transition probabilities. One may, or may not, remove the previous current state. Interestingly, solving the new MDP may use as a starting point the previous solution, so that faster convergence is obtained.

Figure 3c shows an optional iteration 362 to the adding of a new state 353, which may be the new current state.

In the various embodiments of system 110 and 160, the communication interfaces may be selected from various alternatives. For example, the interface may be a network interface to a local or wide area network, e.g., the Internet, a storage interface to an internal or external data storage, a keyboard, an application interface (API), etc.

The systems 110 and 160 may have a user interface, which may include well-known elements such as one or more buttons, a keyboard, display, touch screen, etc. The user interface may be arranged for accommodating user interaction for configuring the systems, training the networks on a training set, or applying the system to new sensor data, etc.

Storage may be implemented as an electronic memory, say a flash memory, or magnetic memory, say hard disk or the like. Storage may comprise multiple discrete memories together making up memory 140, 180 or storage 141-144, 181-184. Storage may comprise a temporary memory, say a RAM. The storage may be cloud storage.

System 110 may be implemented in a single device. System 160 may be implemented in a single device. Typically, the system 110 and 160 each comprise a microprocessor which executes appropriate software stored at the system; for example, that software may have been downloaded and/or stored in a corresponding memory, e.g., a volatile memory such as RAM or a non-volatile memory such as Flash. Alternatively, the systems may, in whole or in part, be implemented in programmable logic, e.g., as field-programmable gate array (FPGA). The systems may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, systems 110 and 160 may comprise circuits for the evaluation of neural networks.

A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only.

Below several further optional refinements, details, and embodiments are illustrated.

An infinite horizon Markov Decision Process (MDP) *M* may be defined as a tuple $\mathcal{M} = (\mathcal{S}, \mathcal{A}, \mathcal{R}, \mathcal{T}, \gamma)$, where $s \in \mathcal{S}$ is a Markov state, $a \in \mathcal{A}$ is an action that an agent can take, $\mathcal{R}: \mathcal{S} \times \mathcal{A} \to \mathbb{R}$ is a reward function, that returns a scalar signal defining the desirability of some observed transition, $0 \leq y \leq 1$ is a discount factor that discounts future rewards exponentially and $\mathcal{T}: \mathcal{S} \times \mathcal{A} \times \mathcal{S} \to [0,1]$ is a transition function, that for a pair of states and an action assigns a probability of transitioning from the first to the second state. The goal of an agent in an MDP is to find a policy $\pi: \mathcal{S} \times \mathcal{A} \to [0,1]$, a function assigning probabilities to actions in states that maximizes the cumulative reward over time until a horizon, or the *return* until a horizon $T: R_t = \sum_{K=0}^{\infty} \gamma^k r_{t+k+1}$. The expected return of a state, action pair under a given policy $\pi$ is given by Q-value function $Q_\pi: \mathcal{S} \times \mathcal{A} \to \mathbb{R}$ and is defined to be $\mathbb{E}_\pi[R_t | s_t = s, a_t = a]$. The value of a state under this policy is given by value function $V_\pi: \mathcal{S} \to \mathbb{R}$, defined to be $V_\pi(s,a) = \max_a Q_\pi(s,a)$ under the Bellman optimality equation.

Value Iteration (VI) is a dynamic programming algorithm that finds Q-values for state, action pairs in MDPs, by iteratively applying the Bellman optimality operator. This can be viewed as a graph diffusion where each state is a vertex and transitions define weighted edges.

Planning for a physical system may be done, at least in approximation, by defining and solving an MDP as above for the physical system. However, such an MDP may be unknown, and may be hard to formulate. Accordingly, the unknown Markov Decision Process (MDP) $\mathcal{M}$ is mapped to a new MDP through a latent space, through a mapping M.

The mapping M may be represented using a neural network parameterized by $\theta$, whose output will be denoted $M_\theta$. The mapping M is also be referred to herein as an encoder that maps from the observable state to the latent space. This mapping M maps a state $s \in \mathcal{S}$ to a latent representation $z \in \mathcal{Z} \subseteq \mathbb{R}^D$; for example, state $s \in \mathcal{S}$ may be an observable state and the latent representation z may be the latent state. In this case the latent space is modelled as a vector space $\mathbb{R}^D$. The transition function $\psi_a^T$ may also be modelled by a neural network $f_\phi: \mathcal{Z} \times \mathcal{A} \to \mathcal{Z}$ parameterized by $\theta$.

Interestingly, the rewards $\psi_a^R$ in the observable MDP may be mapped as well, e.g., by a neural network,

$g_\zeta : \mathcal{Z} \times \mathcal{A} \rightarrow \mathbb{R}$ , parameterized by $\zeta$, that predicts the reward for an observable state. Mapping rewards is optional. A reward function may also be formulated directly on the learned MDP; for many planning purposes, this is sufficient.

During training, a set of *experience tuples* $\mathcal{D} = \{(s_t, a_t, r_t, s_{t+1})\}_{n=1}^N$ may be obtained, e.g., by rolling out an exploration policy $\pi$ for multiple trajectories. During training, the distance between the result of transitioning in observation space, and then mapping to Z, or first mapping to Z and then transitioning in latent space may be minimized. Additionally, a state representation may optionally include information about the reward. For example, one may minimize the distance between the observed reward $\omega_a^R[s]$ and a predicted reward $g_\zeta(M_\theta(s))$. If rewards are discrete, optimization may also be modeled as a classification task. For example, a general reward loss term may be included. For example, training may randomly sample batches of experience tuples from $\mathcal{D}$. One may use $d(z, z') = \frac{1}{2}(z - z')^2$ to model distances in $\mathcal{Z} \subseteq \mathbb{R}^D$ , but this formulation works for general distances and latent spaces, such as cosine similarities on the hypersphere. Here, $f_\phi$ is a function that maps a point in latent space $z \in Z$ to a new state $z' \in Z$ by predicting an *action-effect* that acts on z. For example, one may consider $f_\phi$ to be of the form $f_\phi(z,a) = z + h_\phi(z,a)$, where $h_\phi(z,a)$ may be a feedforward network. The function $g_\zeta : \mathcal{Z} \rightarrow \mathbb{R}$ is a function that predicts the reward from z.

To force the network to differentiate between latent states, without having to introduce pixel reconstructions, and to induce a latent space with state transformations $\Psi$, one may maximize the distance between the state s currently considered and a set $\mathcal{S}_\times$ of randomly selected negative samples from the same episode. Training may use gradient descent on batches of experience tuples. Since $\mathbb{R}^D$ is unbounded, a hinge-loss max(0, $\varepsilon$ - $d(z,z')$) may be used on the negative samples, to prevent infinite expansion of the distance between embeddings. Information about discrete rewards may be modelled by treating them as classes and minimizing the cross-entropy loss between the predicted and observed reward.

The approach has been evaluated to test a) whether the structure of the original problem is recovered b) whether the resulting MDPs that are constructed are plannable and c) whether the approach can easily generalize to new reward functions/tasks in the original MDP. When the approach is used on a system with a known underlying MDP it was found that this MDP was learned well. Furthermore, embodiments have been tested on image manipulation tasks, and an object pickup task.

For example, in an embodiment, the networks were trained for 100 epochs on 1000 episodes sampled from a uniform random policy. Model parameters were optimized using Adam with a learning rate of 0.01, a batch size of 1024 and a latent size of 50. 5 negative samples were used per positive sample, sampling negatives and positives from the same episode, and set $\varepsilon$ in the hinge loss to 1. During planning, 1000 states were sampled from $\mathcal{D}$ and duplicates were removed. The value iteration ran for 500 iterations, with y = 0.9 and $\tau$ = 0.1.

**Figure 4** schematically illustrates an example of an embodiment of a computer-implemented neural-network method (500) to represent a state of a physical system for enabling controlling and/or classifying the physical system, the physical system being arranged with multiple observable states in which the physical system may be configured, and a set of multiple actions which may be performed on the physical system to cause a state transition from a first observable state of the physical system to a second observable state of the physical system, the classifier method comprising

- receiving (510) sensor data representing the state of the physical system,
- applying (520) an encoder function for mapping the sensor data to a latent representation of the state of the physical system, the encoder function comprising one or more neural networks configured for extracting multiple objects from the sensor data and for mapping the multiple objects to the latent space,
- applying (530) a transition function to a latent representation of the state of the physical system and to action data representing an action performed on the physical system, the transition function comprising a neural network producing a predicted latent representation of the state of the physical system having the action performed on it.

**Figure 5** schematically illustrates an example of an embodiment of a computer-implemented neural-network method 600 controlling and/or classifying a physical system. The machine learning planning method comprises

- receiving (610) sensor data representing a current state of the physical system,
- applying (620) an encoder function for mapping the sensor data to a latent representation of the current state of the physical system, the encoder function comprising one or more neural networks configured for extracting multiple objects from the sensor data and for mapping the multiple objects to the latent space, the one or more neural networks being trained according to claim 8, wherein the method further comprises:

- obtaining (630) an action from the policy mapping to be applied to the current observable state to reach a latent goal state from the latent representation of the state of the physical system, and generating a signal for the physical system to transition from the current observable state according to the obtained action.

Instead of obtaining (630), the method may comprise applying (640) a classifier function to a latent representation of the state of the physical system, the classifier function comprising a neural network. The method may also comprise both obtaining 630 and applying 640.

Methods 500 and 600 may be computer implemented. For example, accessing training data, and/or receiving input data may be done using a communication interface, e.g., an electronic interface, a network interface, a memory interface, etc. For example, storing or retrieving parameters may be done from an electronic storage, e.g., a memory, a hard drive, etc., e.g., parameters of the networks. For example, applying a neural network to data of the training data, and/or adjusting the stored parameters to train the network may be done using an electronic computing device, e.g., a computer. The encoder and transition function can also output mean and/or variance, instead of directly the output. In case of mean and variance to obtain the output one has to sample from this defined Gaussian.

In an embodiment, the encoder function comprises a neural network and/or the latent transition function comprises a neural network. Optionally, an observed reward may be modelled, e.g., by a reward function. For example, the reward function may comprise a neural network. The neural networks may comprise one or more convolutional layers, rectifier layers, e.g., a Rectified Linear Unit (ReLU), fully connected layers and the like.

The neural networks, either during training and/or during applying may have multiple layers, which may include, e.g., convolutional layers and the like. For example, the neural networks may have at least 2, 5, 10, 15, 20 or 40 hidden layers, or more, etc. The number of neurons in the neural network may, e.g., be at least 10, 100, 1000, 10000, 100000, 1000000, or more, etc.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform method 500 and/or 600. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

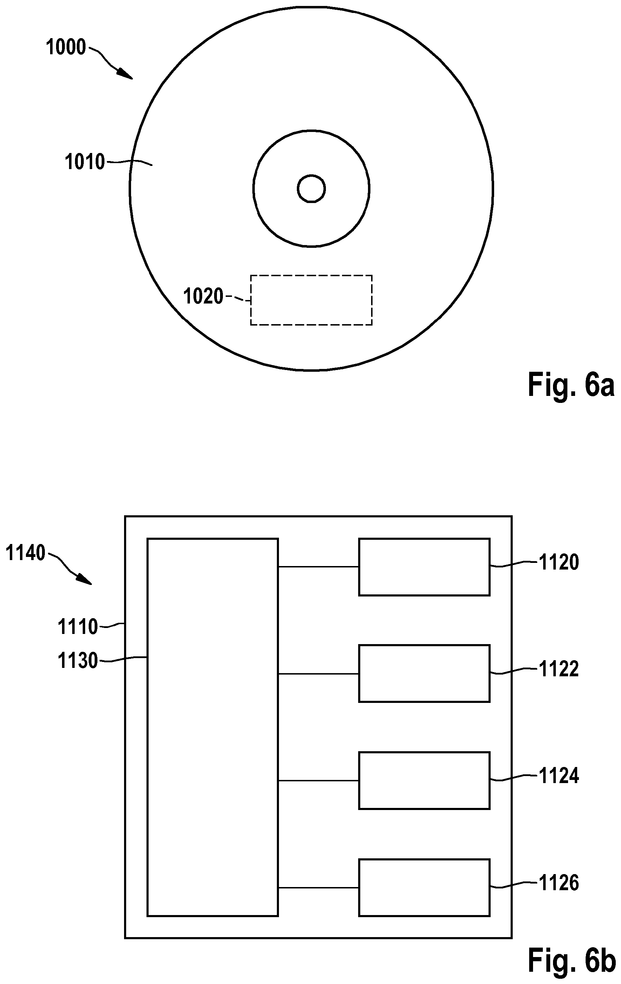

**Figure 6a** shows a computer readable medium 1000 having a writable part 1010 comprising a computer program 1020, the computer program 1020 comprising instructions for causing a processor system to perform a neural-network method according to an embodiment, e.g., a method to represent a state of a physical system, a method for training the corresponding neural networks, a method of planning and/or of classifying. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said method.

**Figure 6b** shows in a schematic representation of a processor system 1140 according to an embodiment of a planner or training a planner. The processor system comprises one or more integrated circuits 1110. The architecture of the one or more integrated circuits 1110 is schematically shown in Figure 6b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the planner or training device may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

It will be apparent that various information described as stored in a storage may be stored in the memory. In this respect, the memory may also be considered to constitute a "storage device" and the storage may be considered a "memory." Various other arrangements will be apparent. Further, the memory and storage may both be considered to be "non-transitory machine-readable media." As used herein, the term "non-transitory" will be understood to exclude transitory signals but to include all forms of storage, including both volatile and non-volatile memories.

While the device is shown as including one of each described component, the various components may be duplicated in various embodiments. For example, the processor may include multiple microprocessors that are configured to independently execute the methods described herein or are configured to perform steps or subroutines of the methods described herein such that the multiple processors cooperate to achieve the functionality described herein. Further, where the device is implemented in a cloud computing system, the various hardware components may belong to separate physical systems. For example, the processor may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1.   A computer-implemented neural network method (500) for enabling controlling a physical robot towards a goal state, including representing a state of the physical robot, wherein the physical robot comprises one or more movable parts, the physical robot being arranged with multiple observable states in which the physical robot may be configured, and a set of multiple actions which may be performed on the physical robot to cause a state transition from a first observable state of the physical robot to a second observable state of the physical robot, the goal state corresponding to a particular desired configuration of the movable parts, the method comprising

- receiving (510) sensor data representing the state of the physical robot, and comprising information describing the position and/or orientation of the one or more movable parts, wherein the sensor data comprises one or more location parameters, wherein a location parameter represents a location, a translation, or an angle of a movable part of the physical robot, and/or wherein the sensor data comprises an image of the physical robot,
- applying (520) an encoder function for mapping the sensor data to a latent representation of the state of the physical robot, the encoder function comprising one or more neural networks configured for extracting multiple objects from the sensor data and for mapping the multiple objects to the latent space,

- applying (530) a transition function to a latent representation of the state of the physical robot and to action data representing an action performed on the physical robot, the transition function comprising a neural network producing a predicted latent representation of the state of the physical robot after having the action performed on it,
- training the encoder function and/or the transition function on a buffer comprising a first sensor data representing a first state of the physical robot, action data representing an action performed on the physical robot and a second sensor data representing a second state of the physical robot after the action has been performed on the system,
- discretizing the latent space by selecting a set of vertices in the latent space,
- defining a Markov decision process on the set of vertices, wherein transition probabilities are obtained from the latent transition function,
- solving the Markov decision process obtaining a policy mapping, mapping from the latent states to actions to reach a latent goal state corresponding to the goal state.

2. The method as in any one of the preceding claims, wherein the physical robot comprises a robot arm.

3. The method as in any one of the preceding claims, wherein a first part of the encoder function comprises a neural network configured for extracting multiple objects from the sensor data, a second part of the encoder function comprises a neural network configured for mapping the multiple objects to the latent space, the first part of the encoder function having multiple object outputs, an object output of the multiple object outputs indicating an object in the sensor data, the second part of the encoder function mapping the multiple object outputs to the latent space.

4. The method as in any one of the preceding claims, wherein the latent representation of the state of the physical robot comprises multiple latent object representations.

5. The method as in Claim 3 or as in Claim 3 and 4, wherein the second part takes a single object representation of the first part as input and maps it to a single latent object representation, the second part being applied in turn to the multiple outputs of the first part.

6. The method as in Claim 3 or as in Claim 3 and 4, wherein multiple types of second part are applied depending on the type of object detected by the first part, the first part outputting an object type, using the object type, the second part of the correct type is applied to the corresponding object outputs of the first part.

7. The method as in any one of the preceding claims, wherein the observable state comprises an image of the system, the sensor data being obtained from an image sensor.

8. The method as in any one of the preceding claims, wherein the set of vertices are latent states that correspond to the observable states in the training data or a subset thereof.

9. The method as in any one of the preceding claims, wherein the encoder function is trained together with the transition function with a loss function that induces that the transition function is consistent with encodings of subsequent samples, while two random samples should have large distances as induced by a hinge loss.

10. The method as in any one of the preceding claims, wherein the encoder function is trained together with the transition function with a loss function that induces that the transition function is consistent with encodings of subsequent samples, wherein

- the loss function comprises a term $-d(\tilde{z}_t, z_{t-1})$ or $max(0, \gamma - d(\tilde{z}_t, z_{t+1}))$, wherein $\tilde{z}_t$ is a random observable state in the training data, or
- the loss function is $\mathcal{L}(z_t, a_t, z_{t+1}, z_x) = d(z_t, z_{t+1}) + d(z_{t+1}, T_\phi(z_t, a_t)) - d(z_t, z_x)$, or $L = d(z_t + T(z_t, a_t), z_{t+1}) + max(0, y - d(\tilde{z}_t, z_{t+1}))$.

11. The method as in any one of the preceding claims, wherein the latent space

- is a topologically compact space, and/or
- a hypersphere or a product of a hypersphere and a further space.

12. The method as in any one of the preceding claims, the latent space being a hypersphere or a product of a hypersphere and a further space, the hypersphere or the part of the latent space which is a hypersphere having a cosine distance metric.

13. A method as in any one of the preceding claims, wherein obtaining the transition probabilities for an action from a first vertex in the set of vertices to a second vertex in the set of vertices comprises applying the latent transition function to the first vertex and action to obtain a predicted vertex and computing a distance in the latent space between the predicted vertex and the second vertex.

14. A method as in any one of the preceding claims, wherein obtaining the transition probabilities for an action from a first vertex in the set of vertices comprises applying the latent transition function to the first vertex and action to obtain a predicted vertex, and computing a distance in the latent space between the predicted vertex and all other vertices in the set, and scale according to a softmax.

15. The method as in claim 4, wherein the transition function comprises a graph neural network (gnn), the graph neural network acting on multiple nodes having the multiple latent object representations as node inputs.

16. The method as in any one of the preceding claims, comprising applying a classifier function to a latent representation of the state of the physical robot obtained from the encoder function, the classifier function comprising a neural network.

17. A computer-implemented neural network method (600) controlling a physical robot towards a goal state, wherein the physical robot comprises one or more movable parts, the physical robot being arranged with multiple observable states in which the physical robot may be configured, and a set of multiple actions which may be performed on the physical robot to cause a state transition from a first observable state of the physical robot to a second observable state of the physical robot, the goal state corresponding to a particular desired configuration of the movable parts, the method comprising

- receiving (610) sensor data representing a current state of the physical robot, and comprising information describing the position and/or orientation of the one or more movable parts, wherein the sensor data comprises one or more location parameters, wherein a location parameter represents a location, a translation, or an angle of a movable part of the physical robot, and/or wherein the sensor data comprises an image of the physical robot,
- applying (620) an encoder function for mapping the sensor data to a latent representation of the current state of the physical robot, the encoder function comprising one or more neural networks configured for extracting multiple objects from the sensor data and for mapping the multiple objects to the latent space, the one or more neural networks being trained according to claim 1, wherein the method further comprises:
- obtaining (630) an action from a policy mapping to be applied to the current observable state to reach a latent goal state corresponding to the goal state from the latent representation of the state of the physical robot, and generating a signal for the physical robot to transition from the current observable state according to the obtained action.

18. A neural network device for enabling controlling a physical robot towards a goal state, wherein the physical robot comprises one or more movable parts, the physical robot being arranged with multiple observable states in which the physical robot may be configured, and a set of multiple actions which may be performed on the physical robot to cause a state transition from a first observable state of the physical robot to a second observable state of the physical robot, the goal state corresponding to a particular desired configuration of the movable parts, the neural network device comprising

- a storage configured for storing neural network parameters,
- an input interface for receiving sensor data representing the state of the physical robot, and comprising information describing the position and/or orientation of the one or more movable parts, wherein the sensor data comprises one or more location parameters, wherein a location parameter represents a location, a translation, or an angle of a movable part of the physical robot, and/or wherein the sensor data comprises an image of the physical robot,
- a processor system configured to

- apply an encoder function for mapping the sensor data to a latent representation of the state of the physical robot, the encoder function comprising one or more neural networks configured for extracting multiple objects from the sensor data and for mapping the multiple objects to the latent space,

- apply a transition function to a latent representation of the state of the physical robot and to action data representing an action performed on the physical robot, the transition function comprising a neural network producing a predicted latent representation of the state of the physical robot after having the action performed on it,
- train the encoder function and/or the transition function on a buffer comprising a first sensor data representing a first state of the physical robot, action data representing an action performed on the physical robot and a second sensor data representing a second state of the physical robot after the action has been performed on the system,
- discretize the latent space by selecting a set of vertices in the latent space,
- define a Markov decision process on the set of vertices, wherein transition probabilities are obtained from the latent transition function,
- solving the Markov decision process obtaining a policy mapping, mapping from the latent states to actions to reach a latent goal state corresponding to the goal state.

19. A neural network device for controlling a physical robot towards a goal state, wherein the physical robot comprises one or more movable parts, the physical robot being arranged with multiple observable states in which the physical robot may be configured, and a set of multiple actions which may be performed on the physical robot to cause a state transition from a first observable state of the physical robot to a second observable state of the physical robot, the goal state corresponding to a particular desired configuration of the movable parts, the neural network device comprising

- a storage configured for storing neural network parameters,
- an input interface for receiving sensor data representing a current state of the physical robot, and comprising information describing the position and/or orientation of the one or more movable parts, wherein the sensor data comprises one or more location parameters, wherein a location parameter represents a location, a translation, or an angle of a movable part of the physical robot, and/or wherein the sensor data comprises an image of the physical robot,
- a processor system configured to

- apply an encoder function for mapping the sensor data to a latent representation of the current state of the physical robot, the encoder function comprising one or more neural networks configured for extracting multiple objects from the sensor data and for mapping the multiple objects to the latent space, the one or more neural networks being trained according to claim 1, wherein the method further comprises:
- obtain an action from a policy mapping to be applied to the current observable state to reach a latent goal state corresponding to the goal state from the latent representation of the state of the physical robot, and generating a signal for the physical robot to transition from the current observable state according to the obtained action.

20. A transitory or non-transitory computer readable medium (1000) comprising data (1020) representing instructions, which when executed by a processor system, cause the processor system to perform a method according to any one of claims 1-17.


**Patentansprüche**

1. Ein computerimplementiertes Neuronales-Netzwerkverfahren (500) zum Ermöglichen des Steuerns eines physischen Roboters in Richtung eines Zielzustands, das das Darstellen eines Zustands des physischen Roboters beinhaltet, wobei der physische Roboter einen oder mehrere bewegliche Teile umfasst, wobei der physische Roboter mit mehreren beobachtbaren Zuständen, in denen der physische Roboter konfiguriert sein kann, und einer Menge mehrerer Aktionen, die am physischen Roboter durchgeführt werden können, eingerichtet ist, um einen Zustandsübergang von einem ersten beobachtbaren Zustand des physischen Roboters zu einem zweiten beobachtbaren Zustand des physischen Roboters zu bewirken, wobei der Zielzustand einer bestimmten gewünschten Konfiguration der beweglichen Teile entspricht, wobei das Verfahren Folgendes umfasst:

- Empfangen (510) von Sensordaten, die den Zustand des physischen Roboters darstellen und Informationen umfassen, die die Position und/oder Ausrichtung des einen oder der mehreren beweglichen Teile beschreiben, wobei die Sensordaten einen oder mehrere Lageparameter umfassen, wobei ein Lageparameter eine Lage, eine Translation oder einen Winkel eines beweglichen Teils des physischen Roboters darstellt, und/oder wobei die Sensordaten ein Bild des physischen Roboters umfassen,

- Anwenden (520) einer Encoderfunktion zum Abbilden der Sensordaten auf eine latente Darstellung des Zustands des physischen Roboters, wobei die Encoderfunktion ein oder mehrere neuronale Netzwerke umfasst, die zum Extrahieren mehrerer Objekte aus den Sensordaten und zum Abbilden der mehreren Objekte auf den latenten Raum konfiguriert sind,

- Anwenden (530) einer Übergangsfunktion auf eine latente Darstellung des Zustands des physischen Roboters und auf Aktionsdaten, die eine am physischen Roboter durchgeführte Aktion darstellen, wobei die Übergangsfunktion ein neuronales Netzwerk umfasst, das eine vorhergesagte latente Darstellung des Zustands des physischen Roboters, nachdem die Aktion an ihm durchgeführt wurde, erzeugt,

- Trainieren der Encoderfunktion und/oder der Übergangsfunktion auf einem Puffer, der erste Sensordaten, die einen ersten Zustand des physischen Roboters darstellen, Aktionsdaten, die eine am physischen Roboter durchgeführte Aktion darstellen, und zweite Sensordaten umfasst, die einen zweiten Zustand des physischen Roboters, nachdem die Aktion am System durchgeführt wurde, darstellen,

- Diskretisieren des latenten Raums durch Auswählen einer Menge von Vertices im latenten Raum,

- Definieren eines Markow-Entscheidungsproblems an der Menge von Vertices, wobei Übergangswahrscheinlichkeiten anhand der latenten Übergangsfunktion erhalten werden,

- Lösen des Markow-Entscheidungsproblems, wodurch eine Strategie-Abbildung erhalten wird, die von den latenten Zuständen auf Aktionen abbildet, um einen latenten Zielzustand zu erreichen, der dem Zielzustand entspricht.

2. Das Verfahren nach einem der vorstehenden Ansprüche, wobei der physische Roboter einen Roboterarm umfasst.

3. Das Verfahren nach einem der vorstehenden Ansprüche, wobei ein erster Teil der Encoderfunktion ein neuronales Netzwerk umfasst, das zum Extrahieren mehrerer Objekte aus den Sensordaten konfiguriert ist, ein zweiter Teil der Encoderfunktion ein neuronales Netzwerk umfasst, das zum Abbilden der mehreren Objekte auf den latenten Raum konfiguriert ist, wobei der erste Teil der Encoderfunktion mehrere Objektausgaben aufweist, wobei eine Objektausgabe der mehreren Objektausgaben ein Objekt in den Sensordaten angibt, wobei der zweite Teil der Encoderfunktion die mehreren Objektausgaben auf den latenten Raum abbildet.

4. Das Verfahren nach einem der vorstehenden Ansprüche, wobei die latente Darstellung des Zustands des physischen Roboters mehrere latente Objektdarstellungen umfasst.

5. Das Verfahren nach Anspruch 3 oder nach Anspruch 3 und 4, wobei der zweite Teil eine einzelne Objektdarstellung des ersten Teils als Eingabe nimmt und sie auf eine einzelne latente Objektdarstellung abbildet, wobei der zweite Teil wiederum auf die mehreren Ausgaben des ersten Teils angewendet wird.

6. Das Verfahren nach Anspruch 3 oder nach Anspruch 3 und 4, wobei abhängig vom Typ eines Objekts, das vom ersten Teil erkannt wird, mehrere Typen eines zweiten Teils angewendet werden, wobei der erste Teil einen Objekttyp ausgibt und unter Verwendung des Objekttyps der zweite Teil des richtigen Typs auf die entsprechenden Objektausgaben des ersten Teils angewendet wird.

7. Das Verfahren nach einem der vorstehenden Ansprüche, wobei der beobachtbare Zustand ein Bild des Systems umfasst, wobei die Sensordaten von einem Bildsensor erhalten werden.

8. Das Verfahren nach einem der vorstehenden Ansprüche, wobei die Menge von Vertices latente Zustände sind, die den beobachtbaren Zuständen in den Trainingsdaten oder einer Teilmenge davon entsprechen.

9. Das Verfahren nach einem der vorstehenden Ansprüche, wobei die Encoderfunktion zusammen mit der Übergangsfunktion mit einer Verlustfunktion trainiert wird, die induziert, dass die Übergangsfunktion mit Codierungen nachfolgender Proben übereinstimmt, während zwei zufällige Proben große Abstände aufweisen sollten, die durch einen Hinge-Verlust induziert werden.

10. Das Verfahren nach einem der vorstehenden Ansprüche, wobei die Encoderfunktion zusammen mit der Übergangsfunktion mit einer Verlustfunktion trainiert wird, die induziert, dass die Übergangsfunktion mit Codierungen nachfolgender Proben übereinstimmt, wobei

- die Verlustfunktion einen Term $-d(\hat{z}_t, z_{t+1})$ oder $\max(0, \gamma - d(\hat{z}_t, z_{t+1}))$ umfasst, wobei $\hat{z}_t$ ein zufälliger beobachtbarer Zustand in den Trainingsdaten ist, oder

- die Verlustfunktion $\mathcal{L}(z_t, a_t, z_{t+1}, z_x) = d(z_t, z_{t+1}) + d(z_{t+1}, T_\phi(z_t, a_t)) - d(z_t, z_x)$, oder $L = d(z_t + T(z_t, a_t), z_{t+1}) + \max(0, \gamma - d(\bar{z}_t, z_{t+1}))$ ist.

11. Das Verfahren nach einem der vorstehenden Ansprüche, wobei der latente Raum

    - ein topologisch kompakter Raum ist, und/oder
    - eine Hypersphäre oder ein Produkt aus einer Hypersphäre und einem weiteren Raum ist.

12. Das Verfahren nach einem der vorstehenden Ansprüche, wobei der latente Raum eine Hypersphäre oder ein Produkt aus einer Hypersphäre und einem weiteren Raum ist, wobei die Hypersphäre oder der Teil des latenten Raums, der eine Hypersphäre ist, eine Kosinus-Distanzmetrik aufweist.

13. Ein Verfahren nach einem der vorstehenden Ansprüche, wobei das Erhalten der Übergangswahrscheinlichkeiten für eine Aktion von einem ersten Vertex in der Menge von Vertices zu einem zweiten Vertex in der Menge von Vertices das Anwenden der latenten Übergangsfunktion auf den ersten Vertex und Aktion, um einen vorhergesagten Vertex zu erhalten, und das Berechnen einer Distanz im latenten Raum zwischen dem vorhergesagten Vertex und dem zweiten Vertex umfasst.

14. Ein Verfahren nach einem der vorstehenden Ansprüche, wobei das Erhalten der Übergangswahrscheinlichkeiten für eine Aktion von einem ersten Vertex in der Menge von Vertices das Anwenden der latenten Übergangsfunktion auf den ersten Vertex und Aktion, um einen vorhergesagten Vertex zu erhalten, und das Berechnen einer Distanz im latenten Raum zwischen dem vorhergesagten Vertex und allen anderen Vertices in der Menge, und Skalierung gemäß einem Softmax umfasst.

15. Das Verfahren nach Anspruch 4, wobei die Übergangsfunktion ein Graph-Neuronales-Netzwerk (GNN) umfasst, wobei das Graph-Neuronale-Netzwerk auf mehrere Knoten einwirkt, die die mehreren latenten Objektdarstellungen als Knoteneingaben aufweisen.

16. Das Verfahren nach einem der vorstehenden Ansprüche, das das Anwenden einer Klassifizierungsfunktion auf eine latente Darstellung des Zustands des physischen Roboters, die anhand der Encoderfunktion erhalten wurde, umfasst, wobei die Klassifizierungsfunktion ein neuronales Netzwerk umfasst.

17. Ein computerimplementiertes Neuronales-Netzwerkverfahren (600), das einen physischen Roboter in Richtung eines Zielzustands steuert, wobei der physische Roboter einen oder mehrere bewegliche Teile umfasst, wobei der physische Roboter mit mehreren beobachtbaren Zuständen, in denen der physische Roboter konfiguriert sein kann, und einem Menge mehrerer Aktionen, die am physischen Roboter durchgeführt werden können, eingerichtet ist, um einen Zustandsübergang von einem ersten beobachtbaren Zustand des physischen Roboters zu einem zweiten beobachtbaren Zustand des physischen Roboters zu bewirken, wobei der Zielzustand einer bestimmten gewünschten Konfiguration der beweglichen Teile entspricht, wobei das Verfahren Folgendes umfasst:

    - Empfangen (610) von Sensordaten, die einen aktuellen Zustand des physischen Roboters darstellen und Informationen umfassen, die die Position und/oder Ausrichtung des einen oder der mehreren beweglichen Teile beschreiben, wobei die Sensordaten einen oder mehrere Lageparameter umfasst, wobei ein Lageparameter eine Lage, eine Translation oder einen Winkel eines beweglichen Teils des physischen Roboters darstellt, und/oder wobei die Sensordaten ein Bild des physischen Roboters umfassen,
    - Anwenden (620) einer Encoderfunktion zum Abbilden der Sensordaten auf eine latente Darstellung des aktuellen Zustands des physischen Roboters, wobei die Encoderfunktion ein oder mehrere neuronale Netzwerke umfasst, die zum Extrahieren mehrerer Objekte aus den Sensordaten und zum Abbilden der mehreren Objekte auf den latenten Raum konfiguriert sind, wobei das eine oder die mehreren neuronalen Netzwerke nach Anspruch 1 trainiert werden, wobei das Verfahren weiter umfasst:

        - Erhalten (630) einer Aktion anhand einer Strategie-Abbildung, die auf den aktuellen beobachtbaren Zustand angewendet werden soll, um einen latenten Zielzustand, der dem Zielzustand entspricht, aus der latenten Darstellung des Zustands des physischen Roboters zu erreichen, und Erzeugen eines Signals für den physischen Roboter, um gemäß der erhaltenen Aktion aus dem aktuellen beobachtbaren Zustand überzugehen.

**18.** Eine Neuronales-Netzwerkvorrichtung zum Ermöglichen des Steuerns eines physischen Roboters in Richtung eines Zielzustands, wobei der physische Roboter einen oder mehrere bewegliche Teile umfasst, wobei der physische Roboter mit mehreren beobachtbaren Zuständen, in denen der physische Roboter konfiguriert sein kann, und einer Menge mehrerer Aktionen, die am physischen Roboter durchgeführt werden können, eingerichtet ist, um einen Zustandsübergang von einem ersten beobachtbaren Zustand des physischen Roboters zu einem zweiten beobachtbaren Zustand des physischen Roboters zu bewirken, wobei der Zielzustand einer bestimmten gewünschten Konfiguration der beweglichen Teile entspricht, wobei die Neuronale-Netzwerkvorrichtung Folgendes umfasst:

- einen Speicher, der zum Speichern von Neuronale-Netzwerkparametern konfiguriert ist,
- eine Eingabeschnittstelle zum Empfangen von Sensordaten, die den Zustand des physischen Roboters darstellen und Informationen umfassen, die die Position und/oder Ausrichtung des einen oder der mehreren beweglichen Teile beschreiben, wobei die Sensordaten einen oder mehrere Lageparameter umfassen, wobei ein Lageparameter eine Lage, eine Translation oder einen Winkel eines beweglichen Teils des physischen Roboters darstellt, und/oder wobei die Sensordaten ein Bild des physischen Roboters umfassen,
- ein Prozessorsystem, das dazu konfiguriert ist,

- eine Encoderfunktion zum Abbilden der Sensordaten auf eine latente Darstellung des Zustands des physischen Roboters anzuwenden, wobei die Encoderfunktion ein oder mehrere neuronale Netzwerke umfasst, die zum Extrahieren mehrerer Objekte aus den Sensordaten und zum Abbilden der mehreren Objekte auf den latenten Raum konfiguriert sind,
- eine Übergangsfunktion auf eine latente Darstellung des Zustands des physischen Roboters und auf Aktionsdaten, die eine am physischen Roboter durchgeführte Aktion darstellen, anzuwenden, wobei die Übergangsfunktion ein neuronales Netzwerk umfasst, das eine vorhergesagte latente Darstellung des Zustands des physischen Roboters, nachdem die Aktion an ihm durchgeführt wurde, erzeugt,
- die Encoderfunktion und/oder die Übergangsfunktion auf einem Puffer zu trainieren, der erste Sensordaten, die einen ersten Zustand des physischen Roboters darstellen, Aktionsdaten, die eine am physischen Roboter durchgeführte Aktion darstellen, und zweite Sensordaten, die einen zweiten Zustand des physischen Roboters, nachdem die Aktion am System durchgeführt wurde, darstellen, umfasst,
- den latenten Raum durch Auswählen einer Menge von Vertices in dem latenten Raum zu diskretisieren,
- einen Markow-Entscheidungsproblem am Satz von Vertices zu definieren, wobei Übergangswahrscheinlichkeiten anhand der latenten Übergangsfunktion erhalten werden,
- den Markow-Entscheidungsproblem zu lösen, wodurch eine Strategie-Abbildung erhalten wird, die von den latenten Zuständen auf Aktionen abbildet, um einen latenten Zielzustand zu erreichen, der dem Zielzustand entspricht.

**19.** Eine Neuronales-Netzwerkvorrichtung zum Steuern eines physischen Roboters in Richtung eines Zielzustands, wobei der physische Roboter einen oder mehrere bewegliche Teile umfasst, wobei der physische Roboter mit mehreren beobachtbaren Zuständen, in denen der physische Roboter konfiguriert sein kann, und einer Menge mehrerer Aktionen, die am physischen Roboter durchgeführt werden können, eingerichtet ist, um einen Zustandsübergang von einem ersten beobachtbaren Zustand des physischen Roboters zu einem zweiten beobachtbaren Zustand des physischen Roboters zu bewirken, wobei der Zielzustand einer bestimmten gewünschten Konfiguration der beweglichen Teile entspricht, wobei die Neuronale-Netzwerkvorrichtung Folgendes umfasst:

- einen Speicher, der zum Speichern von Neuronale-Netzwerkparametern konfiguriert ist,
- eine Eingabeschnittstelle zum Empfangen von Sensordaten, die einen aktuellen Zustand des physischen Roboters darstellen und Informationen umfassen, die die Position und/oder Ausrichtung des einen oder der mehreren beweglichen Teile beschreiben, wobei die Sensordaten einen oder mehrere Lageparameter umfassen, wobei ein Lageparameter eine Lage, eine Translation oder einen Winkel eines beweglichen Teils des physischen Roboters darstellt, und/oder wobei die Sensordaten ein Bild des physischen Roboters umfassen,
- ein Prozessorsystem, das dazu konfiguriert ist,

- eine Encoderfunktion zum Abbilden der Sensordaten auf eine latente Darstellung des aktuellen Zustands des physischen Roboters anzuwenden, wobei die Encoderfunktion ein oder mehrere neuronale Netzwerke umfasst, die zum Extrahieren mehrerer Objekte aus den Sensordaten und zum Abbilden der mehreren Objekte auf den latenten Raum konfiguriert sind, wobei das eine oder die mehreren neuronalen Netzwerke nach Anspruch 1 trainiert werden, wobei das Verfahren weiter umfasst:
- Erhalten einer Aktion anhand einer Strategie-Abbildung, die auf den aktuellen beobachtbaren Zustand angewendet werden soll, um einen latenten Zielzustand, der dem Zielzustand entspricht, aus der latenten Darstellung des Zustands des physischen Roboters zu erreichen, und Erzeugen eines Signals für den physischen Roboter, um gemäß der erhaltenen Aktion aus dem aktuellen beobachtbaren Zustand überzugehen.

20. Ein flüchtiges oder nichtflüchtiges computerlesbares Medium (1000), umfassend Daten (1020), die Anweisungen darstellen, die, wenn sie von einem Prozessorsystem ausgeführt werden, das Prozessorsystem veranlassen, ein Verfahren nach einem der Ansprüche 1-17 durchzuführen.

**Revendications**

1. Un procédé de réseau neuronal mis en œuvre par ordinateur (500) permettant de commander un robot physique vers un état cible, incluant la représentation d'un état du robot physique, dans lequel le robot physique comprend une ou plusieurs parties mobiles, le robot physique étant agencé avec de multiples états observables dans lesquels le robot physique peut être configuré, et un ensemble de multiples actions qui peuvent être effectuées sur le robot physique pour provoquer une transition d'état depuis un premier état observable du robot physique vers un second état observable du robot physique, l'état cible correspondant à une configuration souhaitée particulière des parties mobiles, le procédé comprenant

   - la réception (510) de données de capteur représentant l'état du robot physique, et comprenant des informations décrivant la position et/ou l'orientation des une ou plusieurs parties mobiles, dans lequel les données de capteur comprennent un ou plusieurs paramètres de localisation, dans lequel un paramètre de localisation représente une localisation, une translation ou un angle d'une partie mobile du robot physique, et/ou dans lequel les données de capteur comprennent une image du robot physique,
   - l'application (520) d'une fonction de codage pour mapper les données de capteur à une représentation latente de l'état du robot physique, la fonction de codage comprenant un ou plusieurs réseaux neuronaux configurés pour extraire de multiples objets des données de capteur et pour mapper les multiples objets à l'espace latent,
   - l'application (530) d'une fonction de transition à une représentation latente de l'état du robot physique et à des données d'action représentant une action effectuée sur le robot physique, la fonction de transition comprenant un réseau neuronal produisant une représentation latente prédite de l'état du robot physique après que l'action a été effectuée sur lui,
   - l'entraînement de la fonction de codage et/ou de la fonction de transition sur un tampon comprenant des premières données de capteur représentant un premier état du robot physique, des données d'action représentant une action effectuée sur le robot physique et des secondes données de capteur représentant un second état du robot physique après que l'action a été effectuée sur le système,
   - la discrétisation de l'espace latent en sélectionnant un ensemble de sommets dans l'espace latent,
   - la définition d'un processus de décision markovien sur l'ensemble de sommets, dans lequel les probabilités de transition sont obtenues à partir de la fonction de transition latente,
   - la résolution du processus de décision markovien en obtenant un mappage de politique, en mappant les états latents vers les actions pour atteindre un état cible latent correspondant à l'état cible.

2. Le procédé selon l'une quelconque des revendications précédentes, dans lequel le robot physique comprend un bras de robot.

3. Le procédé selon l'une quelconque des revendications précédentes, dans lequel une première partie de la fonction de codage comprend un réseau neuronal configuré pour extraire de multiples objets à partir des données de capteur, une seconde partie de la fonction de codage comprend un réseau neuronal configuré pour mapper les multiples objets à l'espace latent, la première partie de la fonction de codage présentant de multiples sorties d'objet, une sortie d'objet des multiples sorties d'objet indiquant un objet dans les données de capteur, la seconde partie de la fonction de codage mappant les multiples sorties d'objet à l'espace latent.

4. Le procédé selon l'une quelconque des revendications précédentes, dans lequel la représentation latente de l'état du robot physique comprend de multiples représentations d'objet latentes.

5. Le procédé selon la revendication 3 ou selon les revendications 3 et 4, dans lequel la seconde partie prend une représentation d'objet unique de la première partie comme entrée et la mappe sur une représentation d'objet latente unique, la seconde partie étant appliquée à son tour aux multiples sorties de la première partie.

**6.** Le procédé selon la revendication 3 ou selon les revendications 3 et 4, dans lequel de multiples types de seconde partie sont appliqués en fonction du type d'objet détecté par la première partie, la première partie délivrant en sortie un type d'objet, en utilisant le type d'objet, la seconde partie du type correct est appliquée aux sorties d'objet correspondantes de la première partie.

**7.** Le procédé selon l'une quelconque des revendications précédentes, dans lequel l'état observable comprend une image du système, les données de capteur étant obtenues à partir d'un capteur d'image.

**8.** Le procédé selon l'une quelconque des revendications précédentes, dans lequel l'ensemble de sommets sont des états latents qui correspondent aux états observables dans les données d'entrainement ou un sous-ensemble de celles-ci.

**9.** Le procédé selon l'une quelconque des revendications précédentes, dans lequel la fonction de codage est entraînée conjointement avec la fonction de transition avec une fonction de perte qui induit que la fonction de transition est cohérente avec les codages d'échantillons ultérieurs, tandis que deux échantillons aléatoires doivent présenter de grandes distances comme induit par une perte Hinge.

**10.** Le procédé selon l'une quelconque des revendications précédentes, dans lequel la fonction de codage est formée conjointement avec la fonction de transition avec une fonction de perte qui induit que la fonction de transition est cohérente avec les codages d'échantillons ultérieurs, dans lequel

- la fonction de perte comprend un terme $-d(\tilde{z}_t, z_{t+1})$ ou $\max(0, \gamma - d(\tilde{z}_t, z_{t+1}))$, dans lequel $\tilde{z}_t$ est un état observable aléatoire dans les données d'apprentissage, ou

- la fonction de perte est $\mathcal{L}(z_t, a_t, z_{t+1}, z_x) = d(z_t, z_{t+1}) + d(z_{t+1}, T_\phi(z_t, a_t)) - d(z_t, z_x)$, ou $L = d(z_t + T(z_t, a_t), z_{t+1}) + \max(0, \gamma - d(\tilde{z}_t, z_{t+1}))$.

**11.** Le procédé selon l'une quelconque des revendications précédentes, dans lequel l'espace latent

- est un espace compact topologiquement, et/ou
- est une hypersphère ou un produit d'une hypersphère et d'un espace supplémentaire.

**12.** Le procédé selon l'une quelconque des revendications précédentes, l'espace latent étant une hypersphère ou un produit d'une hypersphère et d'un espace supplémentaire, l'hypersphère ou la partie de l'espace latent qui est une hypersphère présentant une métrique de distance en cosinus.

**13.** Le procédé selon l'une quelconque des revendications précédentes, dans lequel l'obtention des probabilités de transition pour une action d'un premier sommet dans l'ensemble de sommets à un second sommet dans l'ensemble de sommets comprend l'application de la fonction de transition latente au premier sommet et à l'action pour obtenir un sommet prédit et le calcul d'une distance dans l'espace latent entre le sommet prédit et le second sommet.

**14.** Le procédé selon l'une quelconque des revendications précédentes, dans lequel l'obtention des probabilités de transition pour une action d'un premier sommet dans l'ensemble de sommets comprend l'application de la fonction de transition latente au premier sommet et à l'action pour obtenir un sommet prédit, et le calcul d'une distance dans l'espace latent entre le sommet prédit et tous les autres sommets dans l'ensemble, et l'échelle en fonction d'une softmax.

**15.** Le procédé selon la revendication 4, dans lequel la fonction de transition comprend un réseau neuronal graphique (gnn), le réseau neuronal graphique agissant sur de multiples nœuds présentant les multiples représentations d'objet latentes comme entrées de nœud.

**16.** Le procédé selon l'une quelconque des revendications précédentes, comprenant l'application d'une fonction de classification à une représentation latente de l'état du robot physique obtenue à partir de la fonction de codage, la fonction de classification comprenant un réseau neuronal.

**17.** Le procédé de réseau neuronal mis en œuvre par ordinateur (600) commandant un robot physique vers un état cible, dans lequel le robot physique comprend une ou plusieurs parties mobiles, le robot physique étant agencé avec de multiples états observables dans lesquels le robot physique peut être configuré, et un ensemble de multiples actions qui peuvent être effectuées sur le robot physique pour provoquer une transition d'état depuis un premier état observable du robot physique vers un second état observable du robot physique, l'état cible correspondant à une configuration souhaitée particulière des parties mobiles, le procédé comprenant

    - la réception (610) de données de capteur représentant un état actuel du robot physique, et comprenant des informations décrivant la position et/ou l'orientation des une ou plusieurs parties mobiles, dans lequel les données de capteur comprennent un ou plusieurs paramètres de localisation, dans lequel un paramètre de localisation représente une localisation, une translation ou un angle d'une partie mobile du robot physique, et/ou dans lequel les données de capteur comprennent une image du robot physique,

    - l'application (620) d'une fonction de codage pour mapper les données de capteur à une représentation latente de l'état actuel du robot physique, la fonction de codage comprenant un ou plusieurs réseaux neuronaux configurés pour extraire de multiples objets des données de capteur et pour mapper les multiples objets à l'espace latent, les un ou plusieurs réseaux neuronaux étant entraînés selon la revendication 1, dans lequel le procédé comprend en outre:

        - l'obtention (630) d'une action à partir d'un mappage de politique à appliquer à l'état observable actuel pour atteindre un état cible latent correspondant à l'état cible à partir de la représentation latente de l'état du robot physique, et la génération d'un signal pour que le robot physique effectue une transition à partir de l'état observable actuel en fonction de l'action obtenue.

18. Un dispositif de réseau neuronal permettant de commander un robot physique vers un état cible, dans lequel le robot physique comprend une ou plusieurs parties mobiles, le robot physique étant agencé avec de multiples états observables dans lesquels le robot physique peut être configuré, et un ensemble de multiples actions qui peuvent être effectuées sur le robot physique pour provoquer une transition d'état depuis un premier état observable du robot physique vers un second état observable du robot physique, l'état cible correspondant à une configuration souhaitée particulière des parties mobiles, le dispositif de réseau neuronal comprenant

    - un stockage configuré pour stocker des paramètres de réseau neuronal,

    - une interface d'entrée pour recevoir des données de capteur représentant l'état du robot physique, et comprenant des informations décrivant la position et/ou l'orientation des une ou plusieurs parties mobiles, dans lequel les données de capteur comprennent un ou plusieurs paramètres de localisation, dans lequel un paramètre de localisation représente une localisation, une translation ou un angle d'une partie mobile du robot physique, et/ou dans lequel les données de capteur comprennent une image du robot physique,

    - un système de processeur configuré pour

        - appliquer une fonction de codage pour mapper les données de capteur à une représentation latente de l'état du robot physique, la fonction de codage comprenant un ou plusieurs réseaux neuronaux configurés pour extraire de multiples objets des données de capteur et pour mapper les multiples objets à l'espace latent,

        - appliquer une fonction de transition à une représentation latente de l'état du robot physique et à des données d'action représentant une action effectuée sur le robot physique, la fonction de transition comprenant un réseau neuronal produisant une représentation latente prédite de l'état du robot physique après que l'action a été effectuée sur lui,

        - entraîner la fonction de codage et/ou la fonction de transition sur un tampon comprenant des premières données de capteur représentant un premier état du robot physique, des données d'action représentant une action effectuée sur le robot physique et des secondes données de capteur représentant un second état du robot physique après que l'action a été effectuée sur le système,

        - discrétiser l'espace latent en sélectionnant un ensemble de sommets dans l'espace latent,

        - définir un processus de décision markovien sur l'ensemble de sommets, dans lequel les probabilités de transition sont obtenues à partir de la fonction de transition latente,

        - résoudre le processus de décision markovien en obtenant un mappage de politique, en mappant les états latents vers les actions pour atteindre un état cible latent correspondant à l'état cible.

19. Un dispositif de réseau neuronal commandant un robot physique vers un état cible, dans lequel le robot physique comprend une ou plusieurs parties mobiles, le robot physique étant agencé avec de multiples états observables dans lesquels le robot physique peut être configuré, et un ensemble de multiples actions qui peuvent être effectuées sur le robot physique pour provoquer une transition d'état depuis un premier état observable du robot physique vers un second état observable du robot physique, l'état cible correspondant à une configuration souhaitée particulière des parties mobiles, le dispositif de réseau neuronal comprenant

- un stockage configuré pour stocker des paramètres de réseau neuronal,
- une interface d'entrée pour recevoir des données de capteur représentant un état actuel du robot physique, et comprenant des informations décrivant la position et/ou l'orientation des une ou plusieurs parties mobiles, dans lequel les données de capteur comprennent un ou plusieurs paramètres de localisation, dans lequel un paramètre de localisation représente une localisation, une translation ou un angle d'une partie mobile du robot physique, et/ou dans lequel les données de capteur comprennent une image du robot physique,
- un système de processeur configuré pour

- appliquer une fonction de codage pour mapper les données de capteur à une représentation latente de l'état actuel du robot physique, la fonction de codage comprenant un ou plusieurs réseaux neuronaux configurés pour extraire de multiples objets des données de capteur et pour mapper les multiples objets à l'espace latent, les un ou plusieurs réseaux neuronaux étant entraînés selon la revendication 1, dans lequel le procédé comprend en outre:
- l'obtention (630) d'une action à partir d'un mappage de politique à appliquer à l'état observable actuel pour atteindre un état cible latent correspondant à l'état cible à partir de la représentation latente de l'état du robot physique, et la génération d'un signal pour que le robot physique effectue une transition à partir de l'état observable actuel en fonction de l'action obtenue.

20. Un support transitoire ou non transitoire lisible par ordinateur (1000) comprenant des données (1020) représentant des instructions qui, lorsqu'elles sont exécutées par un système processeur, amènent le système processeur à effectuer un procédé selon l'une quelconque des revendications 1-17.

Fig. 1a

Fig. 1b

160 ⌐

170

180

190

**Fig. 1c**

160 ⌐

171 — 181

172 — 182

174 — 183

175 — 184

**Fig. 1d**

Fig. 2a

Fig. 2b

Fig. 3a

Fig. 3b

Fig. 3c

301    311    318    319

**Fig. 3d**

500

510
520
530

**Fig. 4**

600

610
620
630
640

**Fig. 5**

**Fig. 6a**

**Fig. 6b**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AVIV TAMAR**. *Value Iteration Networks*
- **NICHOLAS WATTERS et al.** COBRA: Data-Efficient Model-Based RL through Unsupervised Object Discovery and Curiosity-Driven Exploration. *ARXIV.ORG*, 22 May 2019
- **CHRISTOPHER P BURGESS et al.** MONet: Unsupervised Scene Decomposition and Representation. *ARXIV.ORG*, 22 January 2019

- **OLIVER KROEMER et al.** A Review of Robot Learning for Manipulation: Challenges, Representations, and Algorithms. *ARXIV.ORG*, 06 July 2019
- **MARCIN ANDRYCHOWICZ et al.** Learning Dexterous In-Hand Manipulation. *ARXIV.ORG*, 01 August 2018